# EUROPEAN PATENT APPLICATION

(11) **EP 4 742 162 A1**
(43) Date of publication of application: **13.05.2026**
(21) Application number: 24835799.8
(22) Date of filing: 21.05.2024
(51) Int. Cl.: G06T 9/40

(54) **DECODING METHOD, DECODING DEVICE, AND ENCODING DEVICE**

(30) Priority: 05.07.2023 US 202363524986 P
(71) Applicant: Panasonic Intellectual Property Corporation of America, Torrance, CA 90504 (US)
(72) Inventor: OHKAWA, Masato, Kadoma-shi, Osaka 571-0057 (JP); IGUCHI, Noritaka, Kadoma-shi, Osaka 571-0057 (JP); SUGIO, Toshiyasu, Kadoma-shi, Osaka 571-0057 (JP); NISHI, Takahiro, Kadoma-shi, Osaka 571-0057 (JP); ITO, Atsushi, Kadoma-shi, Osaka 571-0057 (JP)
(74) Representative: Grünecker Patent- und Rechtsanwälte PartG mbB
(86) International application number: PCT/JP2024/018679
(87) International publication number: WO 2025/009278

(57) **Abstract**

A decoding method includes: in a first prediction process performed when a depth of a current node that stores a three-dimensional point is less than a first threshold value, prioritizing inter prediction over intra prediction (S501); in a second prediction process performed when the depth is less than a second threshold value and less than or equal to the first threshold value, using a prediction scheme indicated in control information included in a bitstream, the second threshold value being greater than the first threshold value (S502); and in a third prediction process performed when the depth is less than or equal to the second threshold value, using the intra prediction (S503). For example, in at least one of the first prediction process, the second prediction process, or the third prediction process, both the intra prediction and the inter prediction need not be used under a predetermined condition.

## Description

### [Technical Field]

The present disclosure relates to a decoding method, an encoding method, a decoding device, and an encoding device.

### [Background Art]

Devices or services utilizing three-dimensional data are expected to find their widespread use in a wide range of fields, such as computer vision that enables autonomous operations of cars or robots, map information, monitoring, infrastructure inspection, and video distribution. Three-dimensional data is obtained through various means including a distance sensor such as a rangefinder, as well as a stereo camera and a combination of a plurality of monocular cameras.

Methods of representing three-dimensional data include a method known as a point cloud scheme that represents the shape of a three-dimensional structure by a point cloud in a three-dimensional space. In the point cloud scheme, the positions and colors of a point cloud are stored. While point cloud is expected to be a mainstream method of representing three-dimensional data, a massive amount of data of a point cloud necessitates compression of the amount of three-dimensional data by encoding for accumulation and transmission, as in the case of a two-dimensional moving picture (examples include Moving Picture Experts Group-4 Advanced Video Coding (MPEG-4 AVC) and High Efficiency Video Coding (HEVC) standardized by MPEG).

Meanwhile, point cloud compression is partially supported by, for example, an open-source library (Point Cloud Library) for point cloud-related processing.

Furthermore, a technique for searching for and displaying a facility located in the surroundings of the vehicle by using three-dimensional map data is known (see, for example, Patent Literature (PTL) 1).

### [Citation List]

### [Patent Literature]

[PTL 1] International Publication WO 2014/020663

### [Summary of Invention]

### [Technical Problem]

In such encoding methods and decoding methods, there is a demand for improving encoding efficiency.

The present disclosure has as an object to provide a decoding method, an encoding method, a decoding device, or an encoding device capable of improving encoding efficiency.

### [Solution to Problem]

A decoding method according to an aspect of the present disclosure includes: in a first prediction process performed when a depth of a current node that stores a three-dimensional point is less than a first threshold value, prioritizing inter prediction over intra prediction; in a second prediction performed when the depth is less than a second threshold value and less than or equal to the first threshold value, using a prediction scheme indicated in control information included in a bitstream, the second threshold value being greater than the first threshold value; and in a third prediction process performed when the depth is less than or equal to the second threshold value, using the intra prediction.

A decoding device according to an aspect of the present disclosure includes: a processor; and memory. Using the memory, the processor: in a first prediction process performed when a depth of a current node that stores a three-dimensional point is less than a first threshold value, prioritizes inter prediction over intra prediction; in a second prediction process performed when the depth is less than a second threshold value and less than or equal to the first threshold value, uses a prediction scheme indicated in control information included in a bitstream, the second threshold value being greater than the first threshold value; and in a third prediction process performed when the depth is less than or equal to the second threshold value, uses the intra prediction.

### [Advantageous Effects of Invention]

The present disclosure can provide a decoding method, an encoding method, a decoding device, or an encoding device capable of improving encoding efficiency.

### [Brief Description of Drawings]

[FIG. 1]

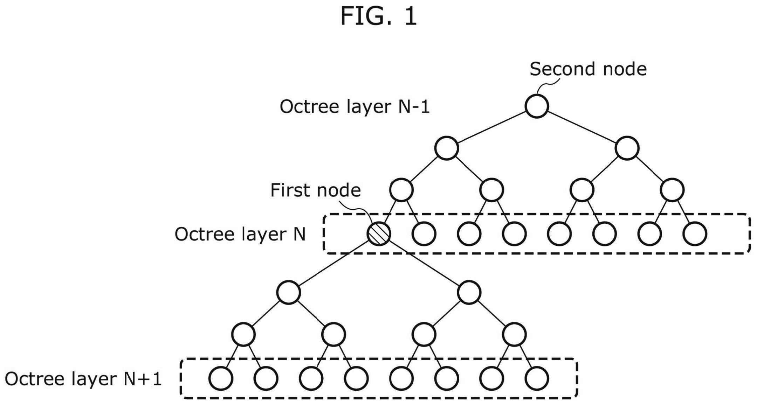

   FIG. 1 is a diagram illustrating an example of a RAHT current node according to an embodiment.
[FIG. 2]

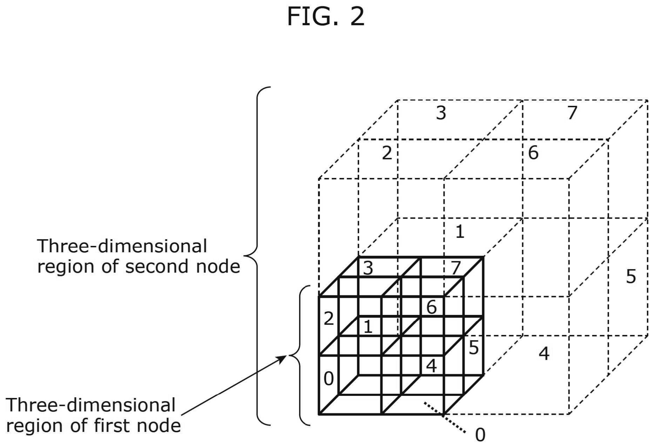

   FIG. 2 is a diagram illustrating a three-dimensional region in an octree structure corresponding to the RAHT current node according to the embodiment.
[FIG. 3]

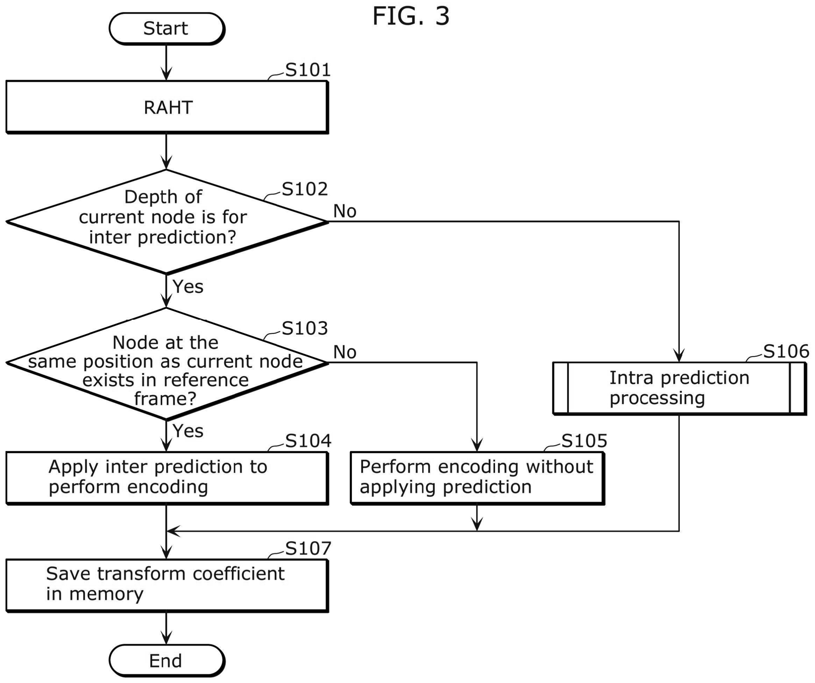

   FIG. 3 is a flowchart of a first example of encoding processing according to an embodiment.
[FIG. 4]

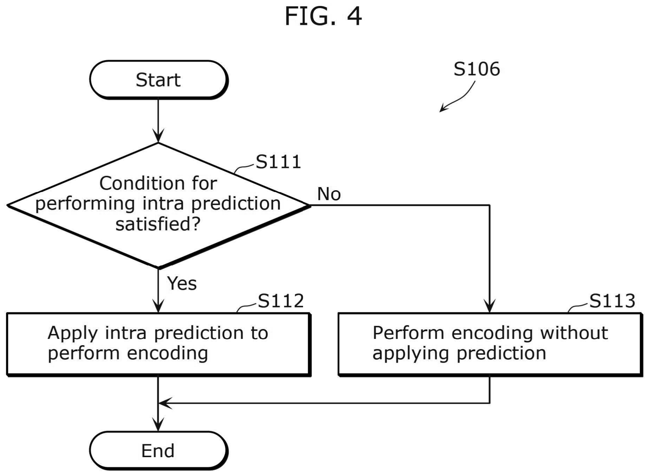

   FIG. 4 is a flowchart of intra prediction processing by an encoding device according to an embodiment.
[FIG. 5]

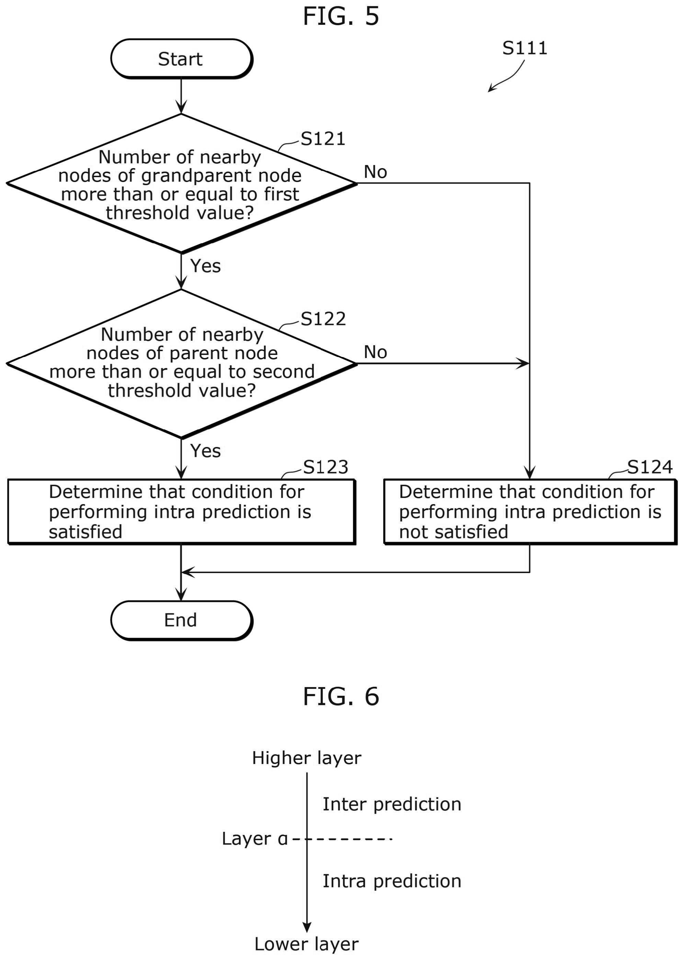

   FIG. 5 is a flowchart of determination processing of conditions for performing intra prediction according to an embodiment.
[FIG. 6]
   FIG. 6 is a diagram illustrating the relationship between layers and prediction to be applied in the first example according to the embodiment.
[FIG. 7]

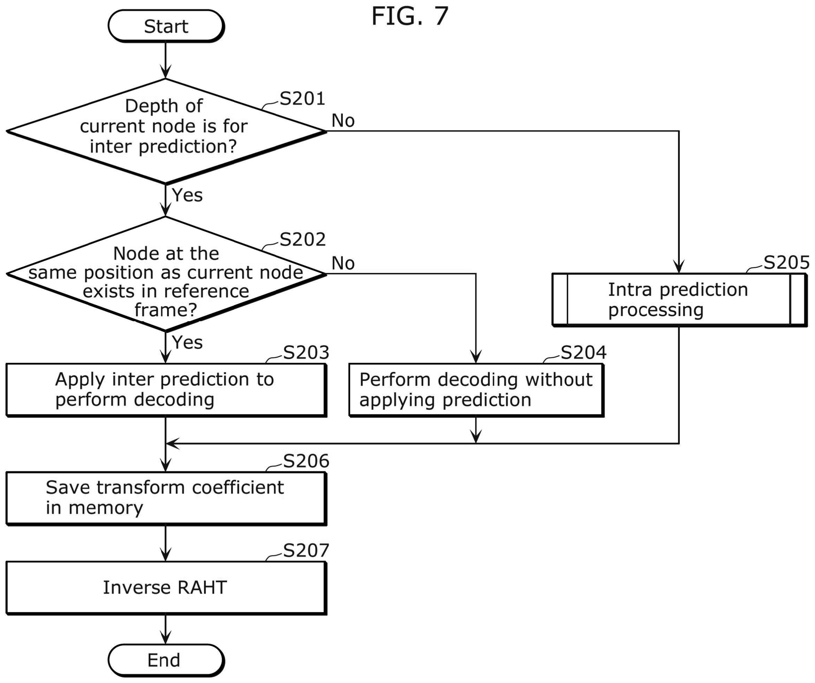

   FIG. 7 is a flowchart of a first example of decoding processing according to an embodiment.
[FIG. 8]

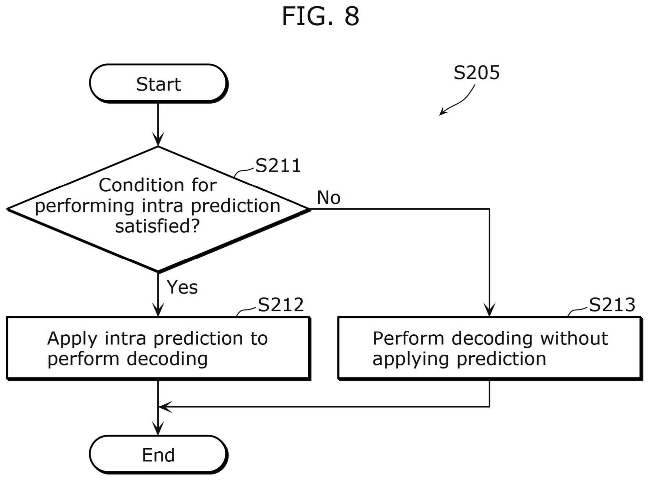

   FIG. 8 is a flowchart of intra prediction processing by a decoding device according to an embodiment.
[FIG. 9]

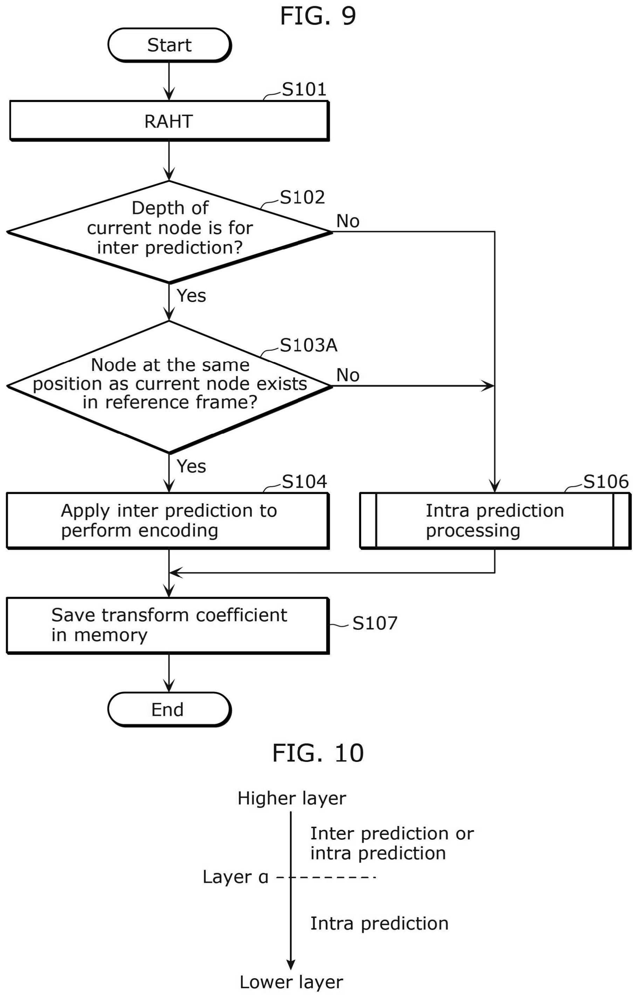

   FIG. 9 is a flowchart of a second example of encoding processing according to the embodiment.
[FIG. 10]
   FIG. 10 is a diagram illustrating the relationship between layers and prediction to be applied in the second example according to the embodiment.
[FIG. 11]

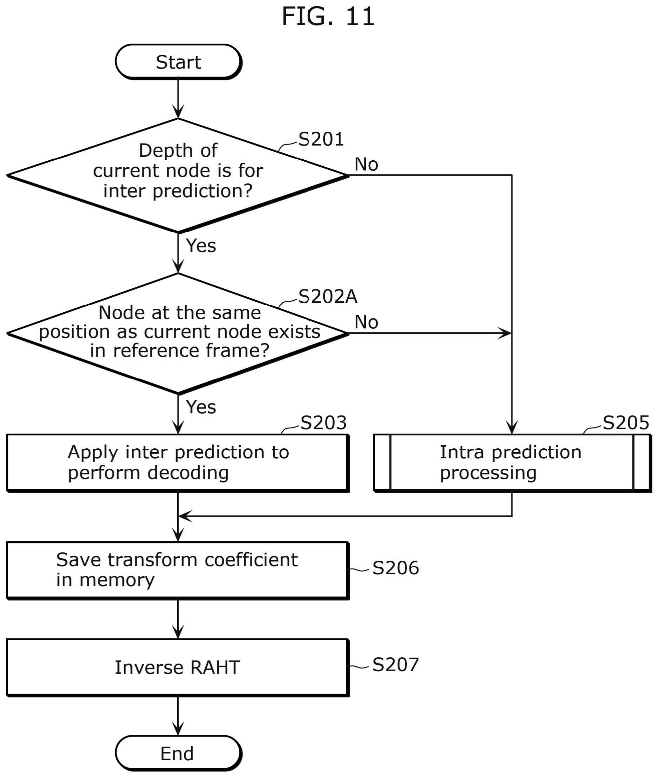

   FIG. 11 is a flowchart of a second example of decoding processing according to the embodiment.
[FIG. 12]

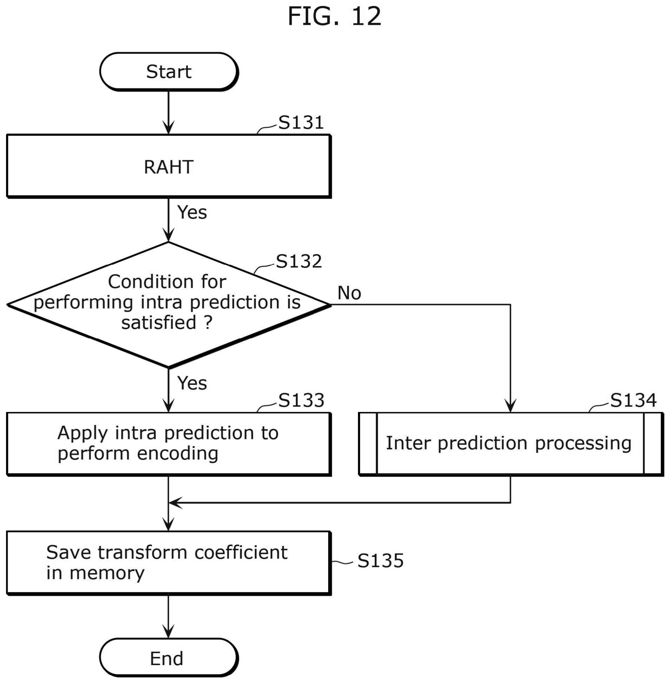

   FIG. 12 is a flowchart of a third example of encoding processing according to the embodiment.
[FIG. 13]

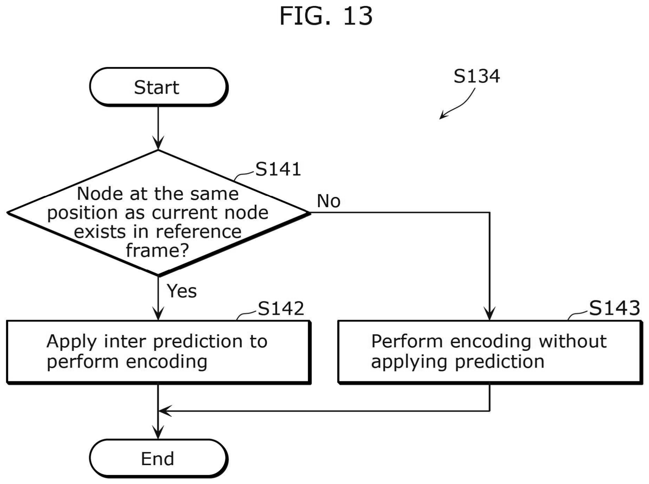

   FIG. 13 is a flowchart of inter prediction processing by an encoding device according to an embodiment.
[FIG. 14]

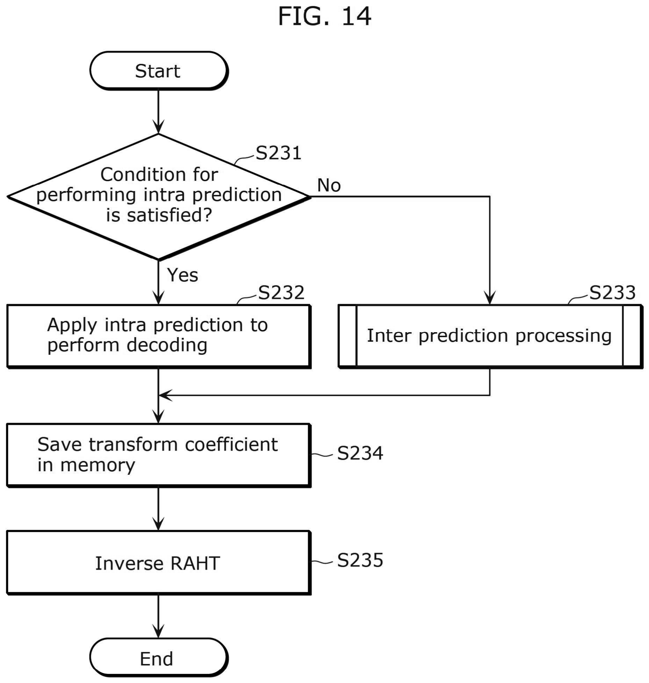

   FIG. 14 is a flowchart of a third example of decoding processing according to the embodiment.
[FIG. 15]

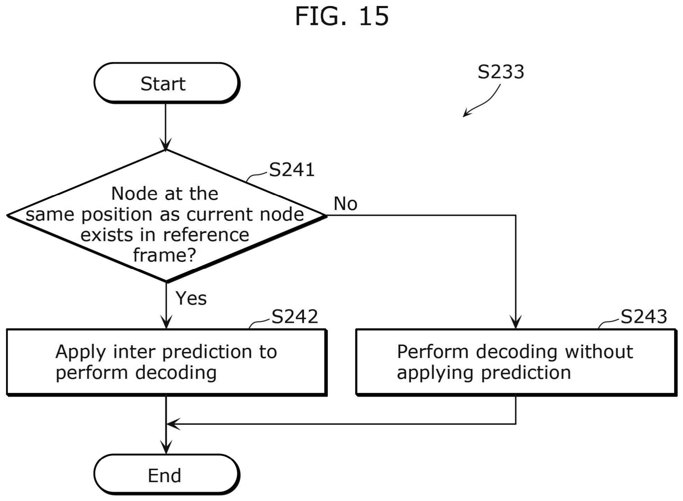

   FIG. 15 is a flowchart of inter prediction processing by a decoding device according to an embodiment.
[FIG. 16]

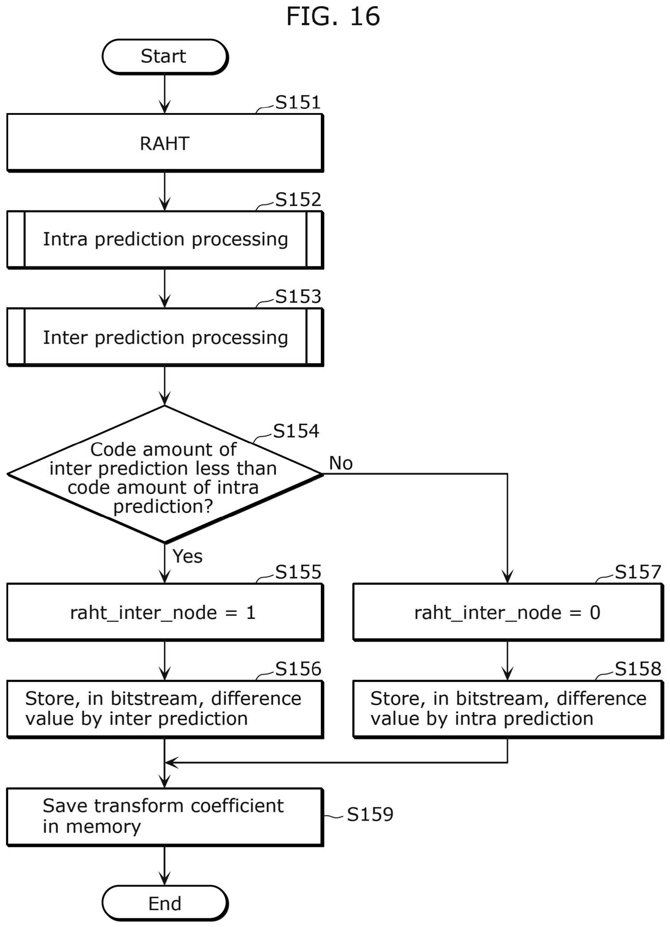

   FIG. 16 is a flowchart of a fourth example of encoding processing according to the embodiment.
[FIG. 17]

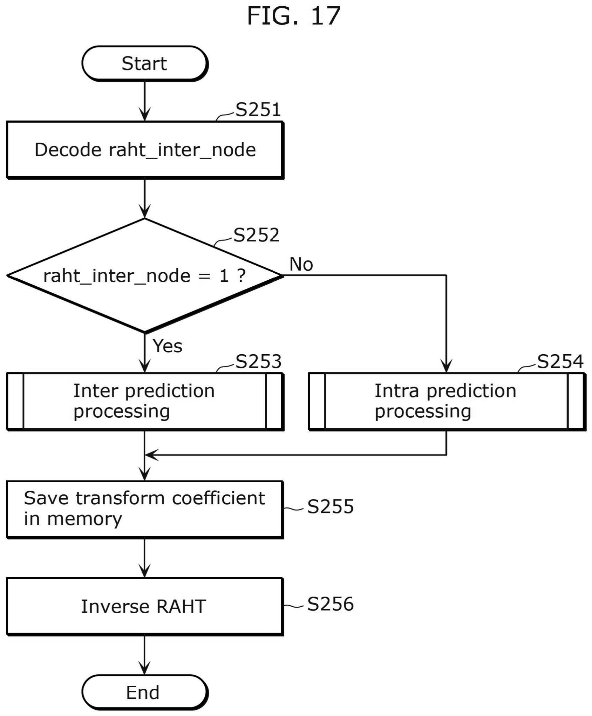

   FIG. 17 is a flowchart of a fourth example of decoding processing according to the embodiment.
[FIG. 18]

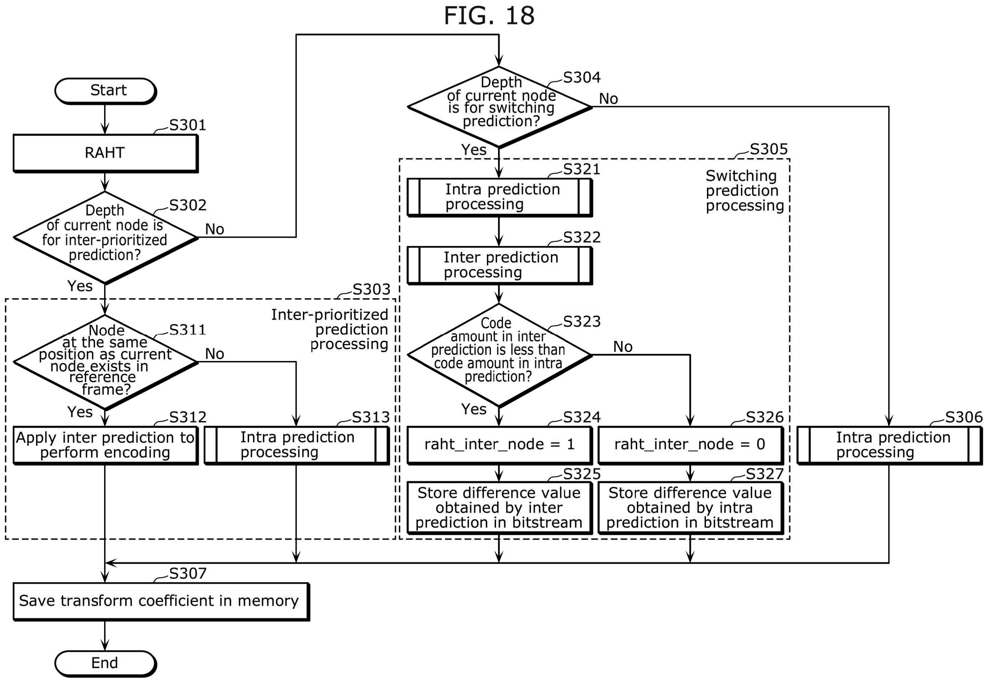

   FIG. 18 is a flowchart of a fifth example of encoding processing according to the embodiment.
[FIG. 19]

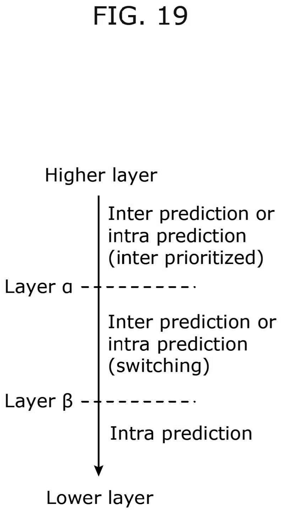

   FIG. 19 is a diagram illustrating the relationship between layers and prediction to be applied in the fifth example according to the embodiment.
[FIG. 20]

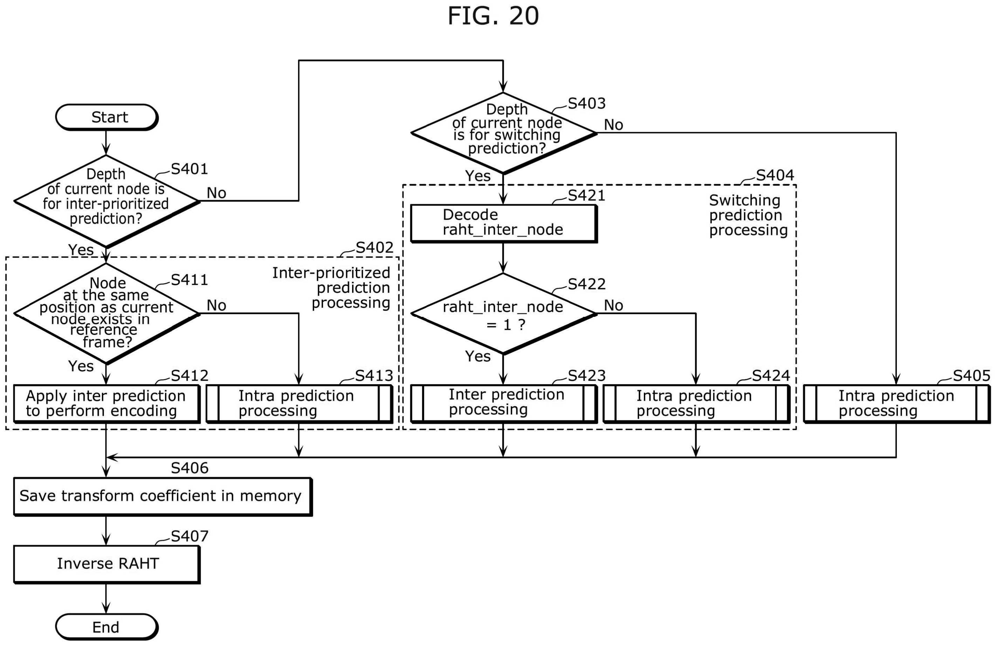

   FIG. 20 is a flowchart of a fifth example of decoding processing according to the embodiment.
[FIG. 21]

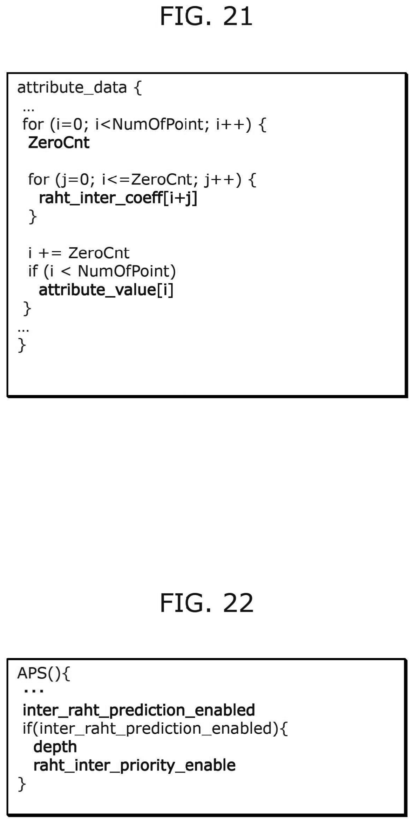

   FIG. 21 is a diagram illustrating a syntax example of attribute data according to an embodiment.
[FIG. 22]
   FIG. 22 is a diagram illustrating a syntax example of APS according to an embodiment.
[FIG. 23]

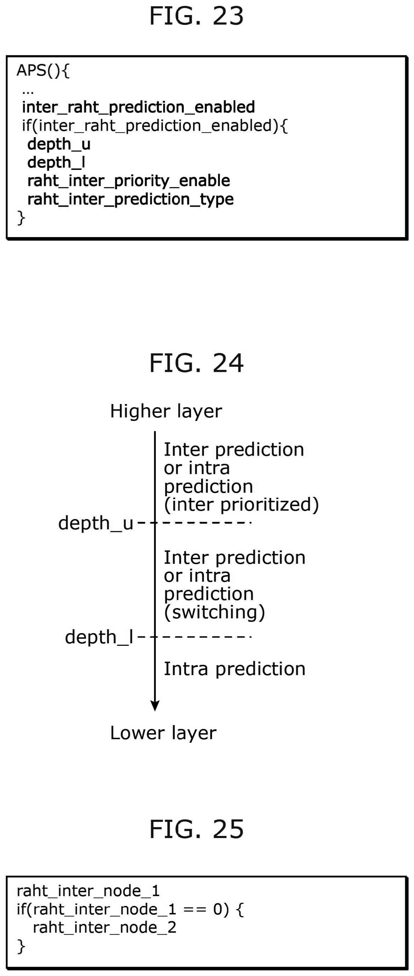

   FIG. 23 is a diagram illustrating another syntax example of APS according to an embodiment.
[FIG. 24]
   FIG. 24 is a diagram for describing depth_u and depth_I according to the embodiment.
[FIG. 25]
   FIG. 25 is a diagram illustrating a syntax example related to raht_inter_node_1 and raht_inter_node_2 according to the embodiment.
[FIG. 26]

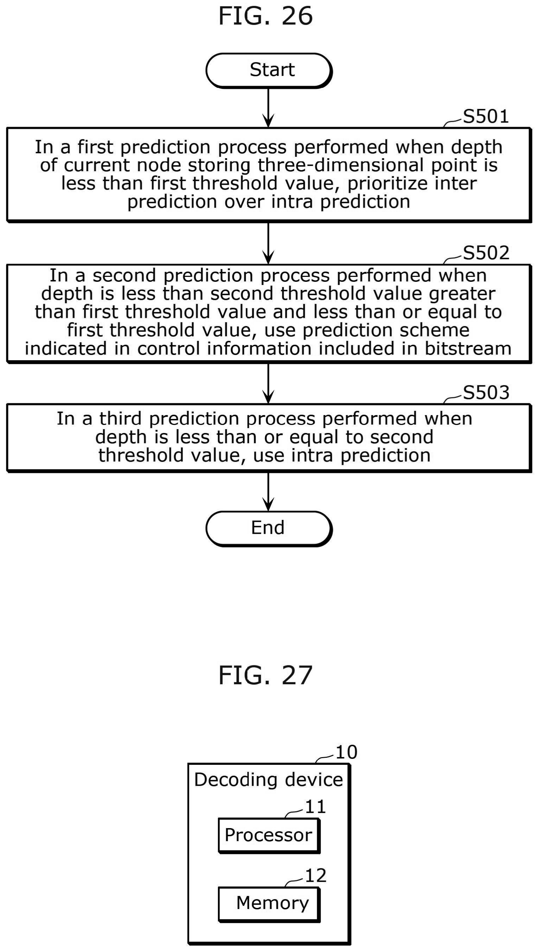

   FIG. 26 is a flowchart of decoding processing according to an embodiment.
[FIG. 27]
   FIG. 27 is a block diagram of a decoding device according to an embodiment.
[FIG. 28]

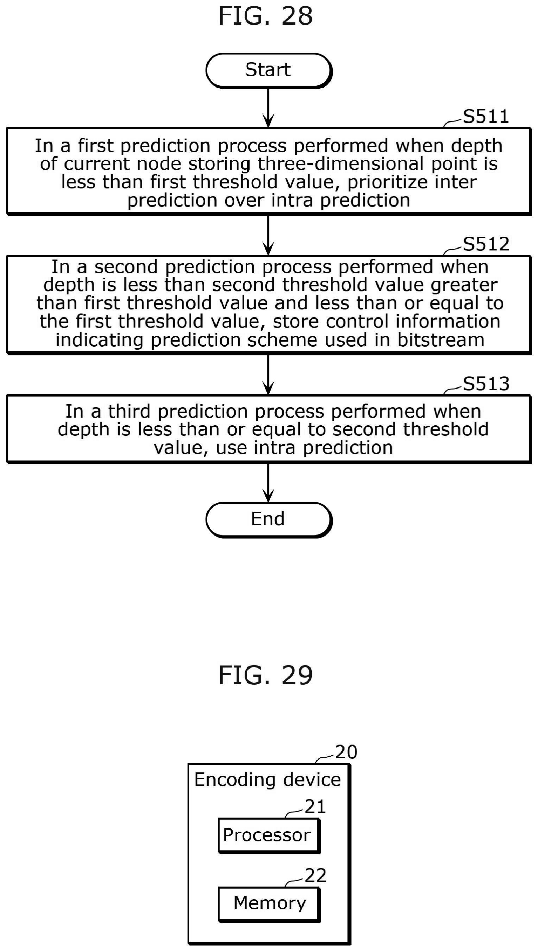

   FIG. 28 is a flowchart of encoding processing according to an embodiment.
[FIG. 29]
   FIG. 29 is a block diagram of an encoding device according to an embodiment.

### [Description of Embodiments]

A decoding method according to an aspect of the present disclosure includes: in a first prediction process performed when a depth of a current node that stores a three-dimensional point is less than a first threshold value, prioritizing inter prediction over intra prediction; in a second prediction process performed when the depth is less than a second threshold value and less than or equal to the first threshold value, using a prediction scheme indicated in control information included in a bitstream, the second threshold value being greater than the first threshold value; and in a third prediction process performed when the depth is less than or equal to the second threshold value, using the intra prediction.

The inventors have found that, with three-dimensional data, there is a tendency that the deeper the current node is, the more suitable intra prediction is, and the shallower the current node is, the more suitable inter prediction is. A prediction process that is suited to the depth of the current node improves coding efficiency. In this aspect, the prediction process can be switched between three stages of node depths. Specifically, inter prediction is prioritized for a shallow node, intra prediction is used (prioritized) for a deep node, and inter prediction or intra prediction is used for a node located therebetween. Accordingly, compared to when the prediction process is switched between two stages of node depth, coding efficiency may improve further. Therefore, a decoding method according to the aspect can appropriately decode a bitstream for which coding efficiency has been improved.

Depending on the three-dimensional data, there are cases where prediction is difficult. In view of this, for example, in at least one of the first prediction process, the second prediction process, or the third prediction process, both the intra prediction and the inter prediction need not be used under a predetermined condition. Accordingly, in the encoding device, according to a predetermined condition, some nodes can be encoded without using a prediction process, and thus a bitstream for which coding efficiency has been improved can be generated. It should be noted that, in the present disclosure, the prediction process is decoding the value of a three-dimensional point to be decoded, using the value of a three-dimensional point that is referred to.

For example, the decoding method may further include: determining a prediction process to be used for the current node, by using first information that is included in the bitstream and indicates the first threshold value and the second threshold value. Accordingly, the decoding method can determine the prediction process to be used for the current node, using the first information.

For example, the first information may include: second information indicating an ordinal level of the first threshold value from a shallowest depth, and third information indicating an ordinal level of the second threshold value from a deepest depth. Accordingly, the data amount of the first information can be reduced.

For example, the control information may include a first flag for the current node for which the second prediction process is to be used. When the first flag indicates a first value: the control information may further include a second flag for the current node; when the second flag indicates a third value, the intra prediction may be used in a prediction process for the current node; and when the second flag indicates a fourth value, both the inter prediction and the intra prediction need not be used in the prediction process for the current node. When the first flag indicates a second value: the second flag need not included in the bitstream; and the inter prediction may be used in the prediction process for the current node. Accordingly, when the frequency at which inter prediction is to be used is high, the data amount of the control information can be reduced and the processing amount in the decoding device can be reduced.

Furthermore, a decoding device according to an aspect of the present disclosure includes: a processor; and memory. Using the memory, the processor: in a first prediction process performed when a depth of a current node that stores a three-dimensional point is less than a first threshold value, prioritizes inter prediction over intra prediction; in a second prediction process performed when the depth is less than a second threshold value and less than or equal to the first threshold value, uses a prediction scheme indicated in control information included in a bitstream, the second threshold value being greater than the first threshold value; and in a third prediction process performed when the depth is less than or equal to the second threshold value, uses the intra prediction.

Accordingly, in the encoding device, by using a prediction scheme that suits the depth of each node, it is possible to generate a bitstream for which coding efficiency has been improved. Furthermore, the decoding device can appropriately decode the bitstream.

Furthermore, an encoding device according to an aspect of the present disclosure includes: a processor; and memory. Using the memory, the processor: in a first prediction process performed when a depth of a current node that stores a three-dimensional point is less than a first threshold value, prioritizes inter prediction over intra prediction; in a second prediction process performed when the depth is less than a second threshold value and less than or equal to the first threshold value, stores, in a bitstream, control information indicating a prediction scheme used, the second threshold value being greater than the first threshold value; and in a third prediction process performed when the depth is less than or equal to the second threshold value, uses the intra prediction.

Accordingly, the encoding device can generate a bitstream for which coding efficiency has been improved, by using a prediction scheme that suits the depth of each node.

It is to be noted that these general or specific aspects may be implemented as a system, a method, an integrated circuit, a computer program, or a computer-readable recording medium such as a CD-ROM, or may be implemented as any combination of a system, a method, an integrated circuit, a computer program, and a recording medium.

Hereinafter, embodiments will be specifically described with reference to the drawings. It is to be noted that each of the following embodiments indicate a specific example of the present disclosure. The numerical values, shapes, materials, constituent elements, the arrangement and connection of the constituent elements, steps, the processing order of the steps, etc., indicated in the following embodiments are mere examples, and thus are not intended to limit the present disclosure. Among the constituent elements described in the following embodiments, constituent elements not recited in any one of the independent claims will be described as optional constituent elements.

### [EMBODIMENT]

### [First Example of Prediction Encoding Processing of Transform Coefficient]

A description will be given of a first example of a method of switching, by an encoding device (three-dimensional data encoding device), between intra prediction and inter prediction for a transform coefficient obtained by RAHT. The encoding device generates a bitstream by, for example, encoding three-dimensional data. The three-dimensional data is, for example, three-dimensional point cloud data (also called point cloud data). A point cloud is a collection of a plurality of three-dimensional points, and indicates the three-dimensional shape of an object. The point cloud data includes position information and attribute information (also called attribute values) of a plurality of three-dimensional points. The position information indicates the three-dimensional position of each three-dimensional point. Note that the position information may also be called geometry information. For example, the position information is represented in an orthogonal coordinate system or a polar coordinate system.

The attribute information indicates, for example, color information, reflectivity, transmittance, infrared information, normal vector, or time information. One three-dimensional point may have a single attribute information item, or may have a plurality of types of attribute information items.

For example, the encoding device encodes position information by using an N-ary tree structure such as an octree. Specifically, in an octree, a current space is divided into eight nodes (subspaces), and 8-bit information (an occupancy code) indicating whether or not a point cloud is included in each node is generated. In addition, a node in which a point cloud is included is further divided into eight nodes, and 8-bit information indicating whether or not a point cloud is included in each of the eight nodes is generated. This processing is repeated until the number of point clouds included in a layer or node becomes less than or equal to a threshold value determined in advance.

In addition, the encoding device encodes the attribute information by using RAHT (Region Adaptive Hierarchical Transform). The RAHT is a type of hierarchical encoding system for attribute information that uses the position information items of three-dimensional points.

In the RAHT, first, the encoding device generates Morton codes based on the position information items of three-dimensional points, and sorts the attribute information items of the three-dimensional points in the order of the Morton codes. Next, the encoding device applies, for example, Haar transform to the attribute information items of two adjacent three-dimensional points in the order of the Morton codes to generate a high-frequency component and a low-frequency component. In addition, the obtained frequency components are used as input values for the next layer (upper layer), and a plurality of transform coefficients (also called coefficients, encoding coefficients, or RAHT transform values) are obtained by repeating Haar transform for each layer.

FIG. 1 is a diagram illustrating an example of a RAHT current node. FIG. 2 is a diagram illustrating a three-dimensional region in an octree structure corresponding to the RAHT current node illustrated in FIG. 1.

In the RAHT system, frequency conversion processing is performed in units of, for example, 2×2×2 voxels. FIG. 2 illustrates an octree representation of the position information of a point cloud. In addition, the processing is performed for each node included in octree layers illustrated in FIG. 1.

For example, a description will be given of the case focusing on a first node, which is a RAHT current node that exists in an octree layer N. In this case, the lowest frequency component of the eight frequency components for the respective three-dimensional regions of up to eight child nodes of the first node that exist in an octree layer N+1 is used as an input value, and up to eight transform coefficients (frequency components) corresponding to the three-dimensional region of the first node are output by performing RAHT. The lowest frequency component of the output eight transform coefficients is used as one of input values in RAHT of a second node, which is a parent node of the first node. Note that, when the octree layer N+1 is the lowest layer of the octree layers, the three-dimensional regions of the nodes in the layer are points, and the values are the attribute values of the points. That is, in RAHT transform of the first node, the attribute values of up to eight child nodes (points) of the first node are used as input values.

Here, the layers of the octree layers are depths, and are defined as Layer 0, Layer 1, Layer 2, and ... from the top layer.

FIG. 3 is a flowchart of a first example of encoding processing of a transform coefficient according to the present embodiment. The processing illustrated in FIG. 3 is repeatedly performed on, for example, each node of an octree layer included in a current frame to be encoded. First, the encoding device calculates a transform coefficient by performing RAHT on the current node (S101).

Next, the encoding device determines whether or not the depth (level) of the octree layer to which the current node belongs is a depth for inter prediction (S102). Note that the depth for inter prediction may be defined in advance, or may be adaptively determined according to the characteristics of a point cloud.

When the depth to which the current node belongs is the depth for inter prediction (Yes in S102), the encoding device determines whether or not a node at the same position as the current node exists in a reference frame (reference point cloud) (S103). When the encoding device determines that the node at the same position as the current node exists in the reference frame (Yes in S103), the encoding device applies inter prediction to the current node to perform encoding (S104). For example, the encoding device calculates a predicted value by inter prediction, calculates the difference value (also called the prediction residual) between the predicted value and the transform coefficient, and performs arithmetic encoding (entropy encoding) on the difference value to generate encoded data (a bitstream).

For example, in inter prediction, the encoding device calculates, as the predicted value, the transform coefficient of a reference node included in the reference frame stored into a memory included in the encoding device. The memory is also called the reference memory. Here, the reference frame is a frame that is different from the current frame, and is, for example, a frame that is different in time from the current frame. Note that the reference frame may be a frame that is different from the current frame and that is at the same time as the current frame. For example, the reference frame may be a frame at the same time as the current frame but from a different perspective. Note that, here, although an example is illustrated in which a different frame is referred to, a reference processing unit, which is a processing unit different from a current processing unit, may be referred to. Here, the processing unit is a unit obtained by dividing a frame, and is, for example, is a slice or a tile.

In addition, the reference node is, for example, among a plurality of nodes included in the reference frame, a node at the same position as the current node. Note that the reference node is not limited to the node at the same position as the current node, but may be a nearby node at a position close to the current node (the distance is less than or equal to a value determined in advance). For example, the reference node may be a neighboring node of a node at the same position as the current node. That is, the nearby node may be the neighboring node. In addition, the reference nodes may be a plurality of nodes. For example, the reference node may be a plurality of neighboring nodes of a node at the same position as the current node. In this case, a predicted value may be calculated by using the transform coefficients of the plurality of reference nodes. Note that whether or not the position of the current node and the position of a reference node match is determined based on, for example, a Morton code. Whether or not the current node is in the vicinity of a reference node is determined based on whether or not the difference between their Morton codes is less than or equal to a predetermined threshold value.

On the other hand, when the encoding device determines that a node at the same position as the current node does not exist in the reference frame (No in S103), the encoding device performs encoding without applying prediction to the current node (S105). That is, the encoding device applies neither inter prediction nor intra prediction to the current node. For example, the encoding device generates encoded data (a bitstream) by performing arithmetic encoding (entropy encoding) on a transform coefficient.

In addition, when the depth to which the current node belongs is not the depth for inter prediction (No in S102), the encoding device performs intra prediction processing (S106).

FIG. 4 is a flowchart of intra prediction processing (S106). First, the encoding device determines whether or not a condition for performing intra prediction is satisfied to determine whether or not to perform intra prediction (S111). When the condition for performing intra prediction is satisfied (Yes in S111), the encoding device applies intra prediction to perform encoding (S112).

Here, intra prediction is prediction processing that uses the information of other nodes included in the current frame in which the current node is included. For example, in intra prediction, the encoding device calculates a predicted value from the attribute information of a nearby node of the current node. Next, the encoding device calculates a predicted transform coefficient by performing RAHT on the predicted value. Next, the encoding device calculates the difference value (prediction residual) that is the difference between the transform coefficient obtained by performing RAHT on the current node, and the predicted transform coefficient. Next, the encoding device generates encoded data (a bitstream) by performing arithmetic encoding (entropy encoding) on the difference value.

On the other hand, when the condition for performing intra prediction is not satisfied (No in S111), the encoding device performs encoding without applying prediction to the current node (S113). For example, the encoding device generates encoded data (a bitstream) by performing arithmetic encoding (entropy encoding) on the transform coefficient.

In addition, in step S111, the encoding device determines whether or not to perform intra prediction by using, for example, the density of nodes. Specifically, when the density is high, the encoding device determines to perform intra prediction, and when the density is low, the encoding device determines not to perform intra prediction. For example, the encoding device performs determination by using the number of nearby nodes of a grandparent node and a parent node. FIG. 5 is a flowchart of this determination processing (S111).

First, the encoding device determines whether or not the number of nearby nodes of a grandparent node of the current node is more than or equal to a first threshold value (S121). Note that a nearby node is a node that includes one or more points and that is located in the vicinity of the node (the grandparent node in the above) (for example, the distance from the node is less than a predetermined value).

When the number of nearby nodes of the grandparent node is more than or equal to the first threshold value (Yes in S121), the encoding device determines whether or not the number of nearby nodes of a parent node is more than or equal to a second threshold value (S122). When the number of nearby nodes of the parent node is more than or equal to the second threshold value (Yes in S122), the encoding device determines that the condition for performing intra prediction is satisfied (S123).

On the other hand, when the number of nearby nodes of the grandparent node is less than the first threshold value (No in S121), or when the number of nearby nodes of the parent node is less than the second threshold value (No in S122), the encoding device determines that the condition for performing intra prediction is not satisfied (S124). Note that one of step S121 and step S122 may be omitted. Therefore, comparison between the number of nearby nodes of the grandparent node or the parent node and the threshold value is performed, regardless of whether or not intra prediction is performed.

Next, as illustrated in FIG. 3, after step S104, S105, or S106, the encoding device saves the transform coefficient of the current node in the memory for inter prediction (S107). Note that when the depth (layer) to which the current node belongs is not a depth for inter prediction (when the depth is a depth to which intra prediction processing can be applied), the encoding device need not save the transform coefficient of the current node in the memory for inter prediction. Accordingly, the data amount stored into the memory can be reduced.

In this manner, when the depth of the current node is the depth for inter prediction, the encoding device determines that inter prediction can be applied, and when not, the encoding device determines that intra prediction can be applied. That is, the encoding device always gives priority to inter prediction, when the depth of the current node satisfies the condition determined in advance.

FIG. 6 is a diagram illustrating the relationship between layers (depths) and prediction to be applied in the first example. As illustrated in FIG. 6, for example, inter prediction can be applied to layers higher than Layer α. Intra prediction can be applied to layers lower than Layer α.

Here, the hierarchical encoding method using RAHT has the characteristics that the transform coefficients of higher layers with shallower depths indicate lower-frequency components of the attribute information of three-dimensional points included in the current frame, and the transform coefficients of deeper layers indicate higher-frequency components. Generally, since the low-frequency components of attribute information such as color or reflectivity change little over time, the prediction accuracy can be improved by using inter prediction for the low-frequency components. On the other hand, since the high-frequency components of attribute information are easily affected by noise and the like, and change significantly over time, it is difficult to improve the prediction accuracy by inter prediction. Therefore, the encoding device applies inter prediction to or does not perform prediction for higher layers in which many low-frequency components of attribute information are included. Additionally, the encoding device does not apply inter prediction to lower layers in which many high-frequency components are included, but instead applies intra prediction that performs prediction from a nearby node in a frame, or does not perform prediction. Accordingly, the possibility that the coding efficiency can be improved is increased.

In addition, since intra prediction is also effective for prediction of high-frequency components when nearby nodes are dense, the coding efficiency can be improved by applying intra prediction to lower layers with many high-frequency components. Note that, as illustrated in FIG. 5, even in lower layers, when nearby nodes are not dense, the encoding device need not apply intra prediction. Accordingly, it is possible to achieve a balance between reduction of the processing amount and the coding efficiency.

In addition, when the depth of the current node is the depth for inter prediction, the number of nearby nodes of the grandparent node or the parent node included in the condition for performing intra prediction used for the processing illustrated in FIG. 5 need not be calculated, since the number is unnecessary. Accordingly, the processing amount for calculating the number of nearby nodes can be reduced.

In addition, the encoding device may prohibit inter prediction for and apply intra prediction to a predetermined current frame, or need not perform prediction. Accordingly, the encoding device can encode and decode the current frame without depending on inter-frame information, and can use the predetermined current frame as a random access point. Note that, when the current frame is a random access point, the encoding device need not add information required for inter prediction, for example, the information indicating the depth for inter prediction, or the like, to a bitstream. Accordingly, the data amount of the bitstream can be reduced.

### [First Example of Prediction Decoding Processing of Transform Coefficient]

A description will be given of a first example of a method of switching the prediction scheme (intra prediction or inter prediction) by a decoding device (three-dimensional data decoding device) corresponding to the above-described encoding device. The decoding device decodes, for example, a bitstream generated by the above-described encoding device. For example, the decoding device decodes position information by using an N-ary tree structure such as an octree. In addition, the decoding device decodes attribute information by using inverse RAHT, which is the inverse transform of RAHT. Inverse RAHT is a type of layer decoding system for attribute information that uses the position information of a three-dimensional point. The transform coefficient is transformed to attribute information by inverse RAHT.

FIG. 7 is a flowchart of the first example of decoding processing of a transform coefficient according to the present embodiment. The processing illustrated in FIG. 7 is repeatedly performed for, for example, each node of an octree layer included in the current frame to be decoded. Note that processing similar to that in the above-described encoding device is performed for the determination processing of the type of prediction (inter prediction, intra prediction, and no prediction) to be applied to the current node.

First, the decoding device determines whether or not the depth of an octree layer to which a current node belongs is a depth for inter prediction (S201).

When the depth to which the current node belongs is the depth for inter prediction (Yes in S201), the decoding device determines whether or not a node at the same position as the current node exists in a reference frame (S202). When the decoding device determines that the node at the same position as the current node exists in the reference frame (Yes in S202), the decoding device applies inter prediction to the current node to perform decoding (S203). For example, the decoding device generates the difference value of the current node by performing arithmetic decoding (entropy decoding) of the encoded data of the current node included in a bitstream. Next, the decoding device calculates a predicted value by inter prediction, and generates a transform coefficient by adding the predicted value and the difference value. In addition, the calculation method of the predicted value for inter prediction is similar to the processing in the encoding device.

On the other hand, when the decoding device determines that the node at the same position as the current node does not exist in the reference frame (No in S202), the decoding device performs decoding without applying prediction to the current node (S204). That is, the decoding device applies neither inter prediction nor intra prediction to the current node. For example, the decoding device generates the transform coefficient of the current node by performing arithmetic decoding (entropy decoding) of the encoded data of the current node included in the bitstream.

In addition, when the depth to which the current node belongs is not the depth for inter prediction (No in S201), the decoding device performs intra prediction processing (S205).

FIG. 8 is a flowchart of intra prediction processing (S205). First, the decoding device determines whether or not the condition for performing intra prediction is satisfied to determine whether or not to perform intra prediction (S211). When the condition for performing intra prediction is satisfied (Yes in S211), the decoding device applies intra prediction to perform decoding (S212). For example, the decoding device generates the difference value of the current node by performing arithmetic decoding (entropy decoding) of the encoded data of the current node included in the bitstream. Next, the decoding device calculates a predicted value by intra prediction, and calculates a predicted transform coefficient by performing RAHT on the predicted value. The decoding device generates a transform coefficient by adding the predicted transform coefficient and the difference value. In addition, the calculation method of the predicted value of intra prediction is similar to the processing in the encoding device.

On the other hand, when the condition for performing intra prediction is not satisfied (No in S211), the decoding device performs decoding without applying prediction to the current node (S213). For example, the decoding device generates the transform coefficient of the current node by performing arithmetic decoding (entropy decoding) of the encoded data of the current node included in the bitstream. Note that, in step S211, for example, a technique similar to that in FIG. 5 may be used. Alternatively, in step S211, the determination may be performed according to control information included in the bitstream.

Next, as illustrated in FIG. 7, after step S203, S204, or S205, the decoding device saves the transform coefficient of the current node in the memory for inter prediction (S206). Note that, when the depth (layer) to which the current node belongs is not a depth for inter prediction (when the depth is a depth to which intra prediction processing is applied), the decoding device need not save the transform coefficient of the current node in the memory for inter prediction. Accordingly, the data amount stored into the memory can be reduced.

Lastly, the decoding device generates the attribute information of the current node by performing inverse RAHT on the transform coefficient obtained in step S203, S204, or S205 (S207).

As described above, the decoding device can appropriately decode the bitstream generated by the above-described encoding device.

Note that, when the information indicating that the current frame is a random access point is included in the bitstream, the decoding device may apply intra prediction to decode the current frame. Accordingly, the decoding device can decode the current frame without depending on inter-frame information, and can generate a random access point. Note that, when the current frame is a random access point, the decoding device need not decode, from a bitstream, the information required for inter prediction, for example, the information indicating the depth for inter prediction, or the like. Accordingly, the processing amount can be reduced.

### [Second Example of Prediction Encoding Processing of Transform Coefficient]

Hereinafter, a second example of the method of switching the prediction scheme by the encoding device will be described. FIG. 9 is a flowchart of a second example of encoding processing of a transform coefficient. The processing illustrated in FIG. 9 is repeatedly performed for, for example, each node of an octree layer included in the current frame to be encoded. Note that, hereinafter, the differences from the first example illustrated in FIG. 3 will be mainly described. In the processing illustrated in FIG. 9, step S103 is changed to step S103A, and step S105 is deleted in the processing illustrated in FIG. 3.

In the processing illustrated in FIG. 9, in a case where the depth to which a current node belongs is a depth for inter prediction (Yes in S102), when it is determined that a node at the same position as the current node does not exist in a reference frame (No in S103A), the encoding device performs intra prediction processing (S106). Accordingly, even when inter prediction cannot be applied to higher layers with shallow depths, it becomes possible for the encoding device to apply intra prediction that performs prediction from a nearby node in a frame, and there is a possibility that the coding efficiency can be improved. Since intra prediction is also effective for prediction of low-frequency components when nearby nodes are dense, there is a possibility that the coding efficiency can be improved by applying intra prediction instead of inter prediction when inter prediction cannot be applied.

FIG. 10 is a diagram illustrating the relationship between layers (depths) and prediction to be applied in the second example. Note that no prediction is included in intra prediction. As illustrated in FIG. 10, for example, inter prediction or intra prediction can be applied to layers higher than Layer α. Intra prediction can be applied to layers lower than Layer α.

Note that, in the examples illustrated in FIG. 6 and FIG. 10, although the prediction scheme is switched depending on whether or not a layer is higher than Layer α, the prediction scheme may be switched for each layer. However, as described above, no prediction is included in the prediction scheme.

Note that the determination in step S102 need not be performed. Alternatively, all the layers may be set as the depths for inter prediction. In this case, the encoding device determines whether or not inter prediction can be applied to all the layers (for example, whether or not a node at the same position as the current node exists in the reference frame), applies inter prediction when inter prediction can be applied, and otherwise performs intra prediction. For example, the encoding device can include all the layers in the range for inter prediction by setting the value of the depth information indicating the depth for inter prediction, which is to be added to a bitstream, larger than the maximum number of layers for hierarchical encoding by RAHT. Accordingly, for example, in a frame included in a scene where prediction accuracy of inter prediction is high, such as a still scene, the encoding device can improve the coding efficiency by applying inter prediction to all the layers. Note that any system may be used to determine whether or not a scene is still. For example, the encoding device may determine that a scene is still when the value of an overall motion vector between frames is smaller than a threshold value determined in advance.

### [Second Example of Prediction Decoding Processing of Transform Coefficient]

A description will be given of a second example of the method of switching the prediction scheme by a decoding device corresponding to the encoding device according to the above-described second example. FIG. 11 is a flowchart of the second example of decoding processing of a transform coefficient. The processing illustrated in FIG. 11 is repeatedly performed for, for example, each node of an octree layer included in the current frame to be decoded. Note that, hereinafter, the differences from the first example illustrated in FIG. 7 will be mainly described. In the processing illustrated in FIG. 11, step S202 is changed to step S202A, and step S204 is deleted in the processing illustrated in FIG. 7.

In the processing illustrated in FIG. 11, in a case where the depth to which a current node belongs is a depth for inter prediction (Yes in S201), when it is determined that a node at the same position as the current node does not exist in a reference frame (No in S202A), the decoding device performs intra prediction processing (S205). Accordingly, even when inter prediction cannot be applied to higher layers with shallow depths, the decoding device can appropriately decode a bitstream with improved coding efficiency by applying intra prediction that performs prediction from a nearby node in a frame.

Note that the determination in step S201 need not be performed. Alternatively, when the decoding device decodes the information in which all the layers are set as the depths for inter prediction, the decoding device may determine whether or not inter prediction can be applied to all the layers (for example, whether or not a node at the same position as the current node exists in a reference frame), may apply inter prediction when inter prediction can be applied, and otherwise perform intra prediction. For example, the decoding device may determine that all the layers are in the range for inter prediction, when the value of the depth information indicating the depth for inter prediction, which is decoded from a bitstream, is larger than the maximum number of layers for hierarchical encoding by RAHT. Accordingly, the decoding device can appropriately decode the bitstream generated by the above-described encoding device.

### [Third example of Prediction Encoding Processing of Transform Coefficient]

Hereinafter, a third example of the method of switching the prediction scheme by the encoding device will be described. Compared with the first example illustrated in FIG. 3 and FIG. 4, the third example is different in that priority is given to intra prediction over inter prediction.

FIG. 12 is a flowchart of the third example of encoding processing of a transform coefficient. The processing illustrated in FIG. 12 is repeatedly performed for, for example, each node of an octree layer included in the current frame to be encoded. First, the encoding device calculates a transform coefficient by performing RAHT on the current node (S131).

Next, the encoding device determines whether or not the condition for performing intra prediction is satisfied to determine whether or not to perform intra prediction (S132). For example, a technique similar to that in step S111 illustrated in FIG. 4 is used in this determination.

When the condition for performing intra prediction is satisfied (Yes in S132), the encoding device applies intra prediction to perform encoding (S133). On the other hand, when the condition for performing intra prediction is not satisfied (No in S132), the encoding device performs inter prediction processing (S134).

FIG. 13 is a flowchart of inter prediction processing (S134). First, the encoding device determines whether or not a node at the same position as a current node exists in a reference frame (reference point cloud) (S141). When the encoding device determines that the node at the same position as the current node exists in the reference frame (Yes in S141), the encoding device applies inter prediction to the current node to perform encoding (S142).

On the other hand, when the encoding device determines that the node at the same position as the current node does not exist in the reference frame (No in S141), the encoding device performs encoding without applying prediction to the current node (S143).

Next, as illustrated in FIG. 12, after step S133 or S134, the encoding device saves the transform coefficient of the current node in the memory for inter prediction (S135).

In this manner, after performing RAHT, the encoding device performs intra prediction when the condition for performing intra prediction is satisfied, and otherwise performs inter prediction. Accordingly, for example, in a scene with fast inter-frame motion where inter prediction is difficult, the coding efficiency can be improved by performing intra prediction when intra prediction can be performed, and generating a predicted value by inter prediction when intra prediction cannot be performed.

Note that the encoding device may switch between the processing that gives priority to inter prediction as in the first example and the processing that gives priority to intra prediction as in the third example on a sequence-by-sequence, frame-by-frame, or slice-by-slice basis. For example, the encoding device adds, to a bitstream, raht_inter_priority_enable, which is the information indicating whether or not priority is given to inter prediction (whether priority is given to inter prediction or priority is given to intra prediction). When the value of raht_inter_priority_enable is 1, the encoding device gives priority to inter prediction as in the first example, and when the value of raht_inter_priority_enable is 0, the encoding device gives priority to intra prediction as in the third example.

For example, in the case of a scene with fast motion, the encoding device sets raht_inter_priority_enable to a value 0 to give priority to intra prediction, and otherwise sets raht_inter_priority_enable to a value 1 to give priority to inter prediction. Accordingly, since the encoding device can switch the prediction scheme to which priority is to be given to the prediction scheme suitable for a scene, the coding efficiency can be improved.

Note that, in the processing illustrated in FIG. 13, similar to step S102 in FIG. 3, step S141 may include determination of whether or not the depth of the current node is a depth for inter prediction. In this case, when the depth of the current node is the depth for inter prediction, and the node at the same position as the current node exists in the reference frame, the encoding device applies inter prediction to the current node to perform encoding (S142), and otherwise performs encoding without applying prediction to the current node (S143). Accordingly, the encoding device can improve the coding efficiency by applying inter prediction to higher layers including many low-frequency components that change little over time.

### [Third example of Prediction Decoding Processing of Transform Coefficient]

A description will be given of a third example of the method of switching the prediction scheme by a decoding device corresponding to the encoding device according to the above-described third example. FIG. 14 is a flowchart of the third example of decoding processing of a transform coefficient. The processing illustrated in FIG. 14 is repeatedly performed for, for example, each node of an octree layer included in a current frame to be decoded.

First, the decoding device determines whether or not the condition for performing intra prediction is satisfied to determine whether or not to perform intra prediction (S231). For example, a technique similar to that in step S211 illustrated in FIG. 8 is used in this determination.

When the condition for performing intra prediction is satisfied (Yes in S231), the decoding device applies intra prediction to perform decoding (S232). On the other hand, when the condition for performing intra prediction is not satisfied (No in S231), the decoding device performs inter prediction processing (S233).

FIG. 15 is a flowchart of inter prediction processing (S233). First, the decoding device determines whether or not a node at the same position as a current node exists in a reference frame (reference point cloud) (S241). When the decoding device determines that the node at the same position as the current node exists in the reference frame (Yes in S241), the decoding device applies inter prediction to the current node to perform decoding (S242).

On the other hand, when the decoding device determines that the node at the same position as the current node does not exist in the reference frame (No in S241), the decoding device performs decoding without applying prediction to the current node (S243).

Next, as illustrated in FIG. 14, after step S232 or S233, the decoding device saves the transform coefficient of the current node in the memory for inter prediction (S234). Lastly, the decoding device generates the attribute information of the current node by performing inverse RAHT on the transform coefficient obtained in step S232 or S233 (S235).

In this manner, in the third example, the decoding device performs intra prediction by giving priority to intra prediction over inter prediction. That is, the decoding device performs intra prediction when the condition for performing intra prediction is satisfied, and otherwise performs inter prediction. Accordingly, the decoding device can appropriately decode the bitstream generated by the above-described encoding device.

Note that the decoding device may switch between the processing that gives priority to inter prediction as in the first example and the processing that gives priority to intra prediction as in the third example on a sequence-by-sequence, frame-by-frame, or slice-by-slice basis. For example, the decoding device decodes, from a bitstream, raht_inter_priority_enable, which is the information indicating whether or not priority is given to inter prediction (whether priority is given to inter prediction or priority is given to intra prediction). When the value of raht_inter_priority_enable is 1, the decoding device gives priority to inter prediction as in the first example, and when the value of raht_inter_priority_enable is 0, the decoding device gives priority to intra prediction as in the third example. Accordingly, the decoding device can appropriately decode the bitstream generated by the above-described encoding device.

Note that, in the processing illustrated in FIG. 15, similar to step S201 in FIG. 7, step S241 may include determination of whether or not the depth of the current node is a depth for inter prediction. In this case, when the depth of the current node is the depth for inter prediction, and the node at the same position as the current node exists in the reference frame, the decoding device applies inter prediction to the current node to perform decoding (S242), and otherwise performs decoding without applying prediction to the current node (S243). Accordingly, the decoding device can appropriately decode a bitstream with improved coding efficiency by applying inter prediction to higher layers including many low-frequency components that change little over time.

### [Fourth Example of Prediction Encoding Processing of Transform Coefficient]

Hereinafter, a fourth example of the method of switching the prediction scheme by an encoding device will be described. FIG. 16 is a flowchart of the fourth example of encoding processing of a transform coefficient. The processing illustrated in FIG. 16 is repeatedly performed for, for example, each node of an octree layer included in a current frame to be encoded. First, the encoding device calculates a transform coefficient by performing RAHT on a current node (S151).

Next, the encoding device performs intra prediction processing (S152). For example, intra prediction processing (S152) is similar to the processing illustrated in FIG. 4. Next, the encoding device performs inter prediction processing (S153). For example, inter prediction processing (S153) is similar to the processing illustrated in FIG. 13.

Next, the encoding device compares the code amount of encoded data obtained in step S152 in the case where intra prediction is applied, and the code amount of encoded data obtained in step S153 in the case where inter prediction is applied (S154).

When the code amount of encoded data in the case where inter prediction has been applied is less than the code amount of encoded data in the case where intra prediction has been applied (Yes in S154), the encoding device sets raht_inter_node to a value 1, and stores raht_inter_node in a bitstream (S155). Next, the encoding device stores, in the bitstream, the difference value obtained by inter prediction in step S153 (S156).

On the other hand, when the code amount of encoded data in the case where intra prediction has been applied is less than the code amount of encoded data in the case where inter prediction has been applied (No in S154), the encoding device sets raht_inter_node to a value 0, and stores raht_inter_node in a bitstream (S157). Next, the encoding device stores, in the bitstream, the difference value obtained by intra prediction in step S152 (S158).

Next, the encoding device saves the transform coefficient of the current node in the memory for inter prediction (S159).

In this manner, in the fourth example, the encoding device determines whether to apply intra prediction or to apply inter prediction to a transform coefficient for, for example, each node, and adds, to a bitstream, the information (raht_inter_node) indicating which of these has been applied. For example, when the value of raht_inter_node is 1, it indicates that inter prediction has been applied to the current node, and when the value of raht_inter_node is 0, it indicates that intra prediction has been applied to the current node.

Accordingly, the decoding device can determine which of intra prediction and inter prediction is to be applied to the current node by decoding raht_inter_node, and can appropriately decode the bitstream.

Note that, in step S154, for example, the encoding device may compare, between inter prediction and intra prediction, the code amount of encoded data obtained by performing arithmetic encoding on the difference value, and may select the prediction method with a smaller code amount. Accordingly, since the prediction method with which the code amount becomes smaller can be selected appropriately for each node, the coding efficiency can be improved. Alternatively, the encoding device may compare, between inter prediction and intra prediction, the code amount of the difference value before arithmetic encoding, and may select the prediction method with which the code amount becomes smaller. Accordingly, the processing amount for calculating the code amount can be reduced. In addition, the code amount used for determination may include the code amount of raht_inter_node, in addition to the code amount of the difference value. Accordingly, since the prediction scheme that balances the code amount of the difference value and the code amount of raht_inter_node can be selected, the coding efficiency can be improved.

Note that, here, although the example has been illustrated in which raht_inter_node is added to a bitstream for each node, the example is not necessarily limited to this. For example, for each transform coefficient, the information indicating the prediction scheme (intra prediction or inter prediction) to be applied to the transform coefficient may be added to a bitstream. Accordingly, the coding efficiency can be improved by switching the appropriate prediction scheme for each transform coefficient. In addition, for example, for each layer, the information indicating the prediction scheme (intra prediction or inter prediction) to be applied to the layer may be added to a bitstream. Accordingly, the coding efficiency can be improved by switching the appropriate prediction scheme for each layer.

### [Fourth Example of Prediction Decoding Processing of Transform Coefficient]

A description will be given of a fourth example of the method of switching the prediction scheme by a decoding device corresponding to the encoding device according to the above-described fourth example. FIG. 17 is a flowchart of the fourth example of decoding processing of a transform coefficient. The processing illustrated in FIG. 17 is repeatedly performed for, for example, each node of an octree layer included in a current frame to be decoded.

First, the decoding device decodes (obtains), from a bitstream, the information (raht_inter_node) indicating whether a transform coefficient has been encoded by using intra prediction or by using inter prediction for each node (S251).

Next, the decoding device refers to raht_inter_node, and determines whether the current node is to be decoded by intra prediction or inter prediction (S252). Specifically, when raht_inter_node = 1 (Yes in S252), the decoding device determines that the current node has been encoded by using inter prediction, and performs inter prediction processing (S253). For example, inter prediction processing (S253) is similar to the processing illustrated in FIG. 15.

On the other hand, when raht_inter_node = 0 (No in S252), the decoding device determines that the current node has been encoded by using intra prediction, and performs intra prediction processing (S254). For example, intra prediction processing (S254) is similar to the processing illustrated in FIG. 8.

Next, the decoding device saves the transform coefficient of the current node in the memory for inter prediction (S255). Lastly, the decoding device generates the attribute information of the current node by performing inverse RAHT on the transform coefficient obtained in step S253 or S254 (S256).

In this manner, the decoding device can appropriately decode a bitstream with improved coding efficiency by selecting the appropriate prediction method for each node.

Note that, here, although the example has been described in which a bitstream to which raht_inter_node has been added for each node, the example is not necessarily limited to this. For example, for each transform coefficient, the decoding device may decode, from a bitstream, the information indicating the prediction scheme (intra prediction or inter prediction) to be applied to the transform coefficient. Accordingly, the decoding device can appropriately decode a bitstream with improved coding efficiency by switching the appropriate prediction scheme for each transform coefficient. In addition, for example, for each layer, the decoding device may decode, from a bitstream, the information indicating the prediction scheme (intra prediction or inter prediction) to be applied to the layer. Accordingly, the decoding device can appropriately decode a bitstream with improved coding efficiency by switching the appropriate prediction scheme for each layer.

### [Fifth Example of Prediction Encoding Processing of Transform Coefficient]

Hereinafter, a fifth example of the method of switching the prediction scheme by the encoding device will be described. The fifth example is a system that combines the second example of the method of switching the prediction scheme (also called inter-prioritized prediction processing) and the fourth example of the method of switching the prediction scheme (also called switching prediction processing) that were described earlier.

FIG. 18 is a flowchart of a second example of encoding processing of a transform coefficient. The processing illustrated in FIG. 18 is repeatedly performed on, for example, each node of an octree layer included in a current frame to be encoded.

First, the encoding device calculates a transform coefficient by performing RAHT on the current node (S301).

Next, the encoding device determines whether or not the depth (level) of the octree layer to which the current node belongs is a depth for inter-prioritized prediction (S302). Note that the depth for inter-prioritized prediction may be defined in advance, or may be adaptively determined according to the characteristics of a point cloud. Furthermore, information indicating the determined depth for inter-prioritized prediction may be stored in the bitstream.

When the depth to which the current node belongs is the depth for inter-prioritized prediction (Yes in S302), the encoding device applies inter-prioritized prediction processing to the current node (S303).

Here, inter-prioritized prediction processing is the system described in the second example of the method of switching the prediction scheme described earlier, and is a system that preferentially applies inter prediction over intra prediction. Specifically, the encoding device determines whether or not a node at the same position as the current node exists in a reference frame (reference point cloud) (S311). When the encoding device determines that a node at the same position as the current node exists in the reference frame (Yes in S311), the encoding device applies inter prediction to the current node to perform encoding (S312).

On the other hand, when the encoding device determines that a node at the same position as the current node does not exist in the reference frame (No in S311), the encoding device performs intra prediction processing (S313).

It should be noted that the details of the processing in steps S311 to S313 are the same as those in steps S103A, S104, and S106 illustrated in FIG. 9, for example.

On the other hand, when the depth to which the current node belongs is not a depth for inter-prioritized prediction (No in S302), the encoding device determines whether or not to apply switching prediction processing. Specifically, the encoding device determines whether or not the depth of the octree layer to which the current node belongs is a depth for switching prediction (S304). Note that the depth for switching prediction may be defined in advance, or may be adaptively determined according to the characteristics of a point cloud. Furthermore, information indicating the determined depth for switching prediction may be stored in the bitstream.

When the depth to which the current node belongs is a depth for switching prediction (Yes in S304), the encoding device applies switching prediction processing to the current node (S305). Here, switching prediction processing is the system described using the fourth example of the method of switching the prediction scheme described earlier, and is a system in which the encoding device determines, for each node, whether to use intra prediction to encode a transform coefficient or to use inter prediction to encode the transform coefficient, and stores, in a bitstream, information (raht_inter_node) indicating which of these has been used in the encoding. For example, when the value of raht_inter_node is 1, it indicates that the current node was encoded using inter prediction, and when the value of raht_inter_node is 0, it indicates that the current node was encoded using intra prediction.

Specifically, the encoding device performs intra prediction processing (S321). Next, the encoding device performs inter prediction processing (S322). Next, the encoding device compares the code amount of encoded data obtained in step S321 in the case where intra prediction is applied, and the code amount of encoded data obtained in step S322 in the case where inter prediction is applied (S323).

When the code amount of encoded data in the case where inter prediction has been applied is less than the code amount of encoded data in the case where intra prediction has been applied (Yes in S323), the encoding device sets raht_inter_node to a value 1, and stores raht_inter_node in a bitstream (S324). Next, the encoding device stores, in the bitstream, the difference value obtained by inter prediction in step S322 (S325).

On the other hand, when the code amount of encoded data in the case where intra prediction has been applied is less than the code amount of encoded data in the case where inter prediction has been applied (No in S323), the encoding device sets raht_inter_node to a value 0, and stores raht_inter_node in a bitstream (S326). Next, the encoding device stores, in the bitstream, the difference value obtained by intra prediction in step S321 (S327).

It should be noted that the details of the processing in steps S321 to S327 are the same as those in steps S152 to S158 illustrated in FIG. 16, for example.

It should be noted that the determining in step S323 may be performed only in a case where both intra prediction and inter prediction are applicable in step S305. For example, a case where intra prediction is applicable is when conditions for executing intra prediction by methods such as those illustrated in FIG. 4 and FIG. 5 are satisfied. A case where inter prediction is applicable is, for example, when a node at the same position as the current node exists in a reference frame. Specifically, in a case where only intra prediction is applied, steps S326 and S327 may be performed without performing step S323, and in a case where only inter prediction is applied, steps S324 and S325 may be performed without performing step S323. In addition, in these cases, steps S324 and S325 need not be performed, and raht_inter_node need not be added to the bitstream. In this case, by performing the same determining in the decoding device, it is possible to determine which between intra prediction and inter prediction is to be used.

When the depth to which the current node belongs is not a depth for switching prediction (No in S304), the encoding device applies intra prediction processing to the current node (S306). It should be noted that the details of step S306 are the same as those of step S313.

After steps S303, S305, and S306, the encoding device saves the transform coefficient of the current node in the memory for inter prediction (S307).

In this manner, the encoding device applies the combination of suitable prediction schemes or prediction methods according to the depth of the node, to be able to select an optimal prediction method that is in accordance with the characteristics of the current node. Accordingly, the coding efficiency can be improved.

FIG. 19 is a diagram illustrating the relationship between layers and prediction to be applied in the fifth example. As illustrated in FIG. 19, for example, inter-prioritized prediction is applied to a layer higher than layer α. Switching prediction is applied to a layer that is lower than layer α and higher than layer β. Intra prediction is applied to a layer lower than layer β.

Here, in the hierarchical encoding method using RAHT, the transform coefficient of higher layers with shallower depths have a tendency to indicate lower-frequency components of the attribute information of three-dimensional points included in the current frame. In other words, the transform coefficient of higher layers change little over time. Therefore, the encoding device can improve coding efficiency by preferentially performing inter prediction on the transform coefficient of higher layers. In this case, since transmission of code (raht_inter_node) indicating the prediction scheme (intra prediction or inter prediction) to be used also becomes unnecessary, the data amount of the bitstream can be reduced.

Furthermore, for the transform coefficient of an intermediate layer (a layer lower than layer α and higher than layer β), the encoding device can select, from among intra prediction and inter prediction, the prediction scheme with which the code amount becomes smaller, and thus coding efficiency can be improved.

With the transform coefficient of lower layers with deeper depths, higher-frequency components are dominant. In other words, there is a high possibility that the transform coefficient of lower layers will change significantly over time. Therefore, the encoding device can improve coding efficiency by applying intra prediction without applying inter prediction to the transform coefficient of lower layers.

It should be noted that although the foregoing description shows an example in which inter-prioritized prediction processing is applied to higher layers, switching prediction processing is applied to intermediate layers, and intra prediction processing is applied to lower layers, the processing to be applied to each layer is not limited to these. Any method among the first example, the second example, the third example, and the fourth example of the method of switching the prediction scheme, intra prediction, and inter prediction may be combined.

In addition, for example, for each layer, the information indicating the prediction scheme to be applied to the layer may be stored in the bitstream. In this case, the decoding device performs prediction processing on the transform coefficient included in the layer by using the prediction scheme indicated by the information. For example, the information may indicate whether inter-prioritized prediction processing is to be applied to the layer, whether switching prediction processing is to be applied, or whether neither intra prediction nor inter prediction are to be applied. Accordingly, since the encoding device can switch the appropriate prediction scheme for each layer, the coding efficiency can be improved.

### [Fifth example of Prediction Decoding Processing of Transform Coefficient]

A description will be given of a fifth example of the method of switching the prediction scheme by a decoding device corresponding to the encoding device according to the above-described fifth example. FIG. 20 is a flowchart of the fifth example of decoding processing of a transform coefficient. The processing illustrated in FIG. 20 is repeatedly performed for, for example, each node of an octree layer included in a current frame to be decoded.

Next, the decoding device determines whether or not the depth of the octree layer to which the current node belongs is a depth for inter-prioritized prediction (S401). For example, the decoding device obtains (decodes) information indicating the depth for inter-prioritized prediction from the bitstream, and performs the determining based on the obtained information.

When the depth to which the current node belongs is the depth for inter-prioritized prediction (Yes in S401), the decoding device applies inter-prioritized prediction processing to the current node (S402). Specifically, the decoding device determines whether or not a node at the same position as the current node exists in a reference frame (S411). When the decoding device determines that a node at the same position as the current node exists in the reference frame (Yes in S411), the decoding device applies inter prediction to the current node to perform encoding (S412).

On the other hand, when the decoding device determines that a node at the same position as the current node does not exist in the reference frame (No in S411), the decoding device performs intra prediction processing (S413).

It should be noted that the details of the processing in steps S411 to S413 are the same as those in steps S202A, S203, and S205 illustrated in FIG. 11, for example.

On the other hand, when the depth to which the current node belongs is not a depth for inter-prioritized prediction (No in S401), the decoding device determines whether or not to apply switching prediction processing. Specifically, the decoding device determines whether or not the depth of the octree layer to which the current node belongs is a depth for switching prediction (S403). For example, the decoding device obtains (decodes) information indicating the depth for switching prediction from the bitstream, and performs the determining based on the obtained information.

When the depth to which the current node belongs is a depth for switching prediction (Yes in S403), the decoding device applies switching prediction processing to the current node (S404).

First, the decoding device decodes (obtains), from a bitstream, the information (raht_inter_node) indicating whether a transform coefficient has been encoded by using intra prediction or by using inter prediction for each node (S421).

Next, the decoding device refers to raht_inter_node, and determines whether the current node is to be decoded by intra prediction or inter prediction (S422). Specifically, when raht_inter_node = 1 (Yes in S422), the decoding device performs inter prediction processing (S423). On the other hand, when raht_inter_node = 0 (No in S422), the decoding device performs intra prediction processing (S424).

It should be noted that the details of the processing in steps S421 to S424 are the same as those in steps S251 to S254 illustrated in FIG. 17, for example.

When the depth to which the current node belongs is not a depth for switching prediction (No in S403), the decoding device applies intra prediction processing to the current node (S405). It should be noted that the details of step S405 are the same as those of step S413.

After steps S402, S404, or S405, the decoding device saves the transform coefficient of the current node in the memory for inter prediction (S406). Lastly, the decoding device generates the attribute information of the current node by performing inverse RAHT on the transform coefficient obtained in step S412, S413, S423, S424, or S405 (S407).

In this manner, the decoding device applies the combination of suitable prediction schemes or prediction methods according to the depth of the node, to be able to select an optimal prediction method that is in accordance with the characteristics of the current node. Accordingly, the coding efficiency can be improved. Furthermore, the bitstream that was generated by the above-described encoding device and which has improved coding efficiency can be appropriately decoded.

It should be noted that although the foregoing description shows an example in which inter-prioritized prediction processing is applied to higher layers, switching prediction processing is applied to intermediate layers, and intra prediction processing is applied to lower layers, the processing to be applied to each layer is not limited to these. Any method among the first example, the second example, the third example, and the fourth example of the method of switching the prediction scheme, intra prediction, and inter prediction may be combined.

In addition, for each layer, the information indicating the prediction scheme to be applied to the layer may be stored in the bitstream. In this case, the decoding device performs prediction processing on the transform coefficient included in the layer by using the prediction scheme indicated by the information. For example, the information may indicate whether inter-prioritized prediction processing is to be applied to the layer, whether switching prediction processing is to be applied, or whether neither intra prediction nor inter prediction are to be applied. Accordingly, since the decoding device can switch the appropriate prediction scheme for each layer, the coding efficiency can be improved.

It should be noted that a plurality of inter prediction schemes may be included in the above-described plurality of systems. For example, the plurality of inter prediction schemes may include an inter prediction scheme that applies motion compensation (or position correction), and an inter prediction scheme that does not apply motion compensation (or position correction).

For example, inter prediction that does not apply motion compensation may be applied to higher layers that are minimally affected by motion, and inter prediction that applies motion compensation may be applied to lower layers that are affected by motion. With this, it may be possible to improve the coding efficiency.

Furthermore, in FIG. 18 or FIG. 20, an example in which the determining for switching prediction processing is performed after the determining for inter-prioritized prediction processing was performed was described as a method of determining the system to be applied, the order of determining is not limited to such. Furthermore, even in a case where a plurality of systems other than the above are to be used, determining may be performed in an arbitrary order.

It should be noted that in S107 in FIG. 3 and FIG. 9, S206 in FIG. 7 and FIG. 11, S135 in FIG. 12, S234 in FIG. 14, S159 in FIG. 16, S255 in FIG. 17, S307 in FIG. 18, and S406 in FIG. 20, instead of the transform coefficient, attribute information obtained by inverse-transforming the transform coefficient may be stored in the memory. In this case, in the subsequent prediction of the transform coefficient, the transform coefficient is generated by transforming the attribute information stored in the memory, and the transform coefficient is used in prediction. It should be noted that the transform coefficient may be generated by performing motion compensation on the attribute information stored in the memory, and transforming the motion-compensated attribute information, and the transform coefficient may be used in prediction.

### [Syntax Example]

FIG. 21 is a diagram illustrating a syntax example of attribute data (attribute_data). Attribute data is encoded data generated by encoding attribute information. As illustrated in FIG. 21, attribute data includes ZeroCnt, raht_inter_coeff [i+j], and attribute_value [i].

ZeroCnt indicates the number of values 0 that are consecutive in a transform coefficient after quantization. ZeroCnt may be subjected to binarization and arithmetic encoding.

raht_inter_coeff [i+j] indicates whether coeff, which is the (i+j)th transform coefficient, has been encoded by using intra prediction or by using inter prediction. For example, when the value of raht_inter_coeff [i+j] is 1, it indicates that the (i+j)th coeff has been encoded by using inter prediction. When the value of raht_inter_coeff [i+j] is 0, it indicates that the (i+j)th coeff has been encoded by using intra prediction.

Accordingly, the decoding device can determine which of intra prediction and inter prediction is to be used to decode the (i+j)th coeff by decoding raht_inter_coeff [i+j], and can appropriately decode a bitstream. Note that the value of raht_inter_coeff may be subjected to entropy encoding to be added to a header. For example, raht_inter_coeff may be subjected to binarization and arithmetic encoding.

In addition, the encoding device may perform arithmetic encoding on raht_inter_coeff while adaptively switching a context to be used. For example, the encoding device may switch the context to be used according to the value of raht_inter_coeff encoded before raht_inter_coeff to be encoded. More specifically, when the value of raht_inter_coeff encoded immediately before raht_inter_coeff to be encoded is 0, that is, the immediately preceding coeff has been encoded by using intra prediction, the encoding device may select Context 0, and when the value of raht_inter_coeff encoded immediately before raht_inter_coeff to be encoded is 1, that is, the immediately preceding coeff has been encoded by using inter prediction, the encoding device may select Context 1. Accordingly, in a case where intra prediction or inter prediction consecutively occurs, the efficiency of arithmetic encoding of raht_inter_coeff is improved, and the code amount can be reduced. Note that, in order to suppress the processing amount, the encoding device may encode raht_inter_coeff with a fixed length.

Note that, here, although the example has been illustrated in which the information (raht_inter_coeff) indicating which of intra prediction and inter prediction has used for each coeff is added to a bitstream, the example is not necessarily limited to this. For example, raht_inter_node, which is the information indicating which of intra prediction and the inter prediction has been used for each current node to which a current coeff belongs may be added to a bitstream, and this information may be shared by a plurality of coeffs that belong to the current node. More specifically, in a case where three coeffs are included in a current node, when the value of raht_inter_node added to the current node is 1, the decoding device determines that all of the three coeffs belonging to the current node have been encoded by inter prediction. In addition, when the value of raht_inter_node added to the current node is 0, the decoding device determines that all of the three coeffs belonging to the current node have been encoded by intra prediction. In this manner, by sharing raht_inter_node by a plurality of coeffs included in the same current node, the coding efficiency can be improved by appropriately applying intra prediction and inter prediction, while suppressing the code amount of bitstreams.

Note that the encoding device may perform arithmetic encoding on raht_inter_node while adaptively switching the context to be used. For example, the encoding device may switch the context to be used according to the value of raht_inter_node encoded before raht_inter_node to be encoded. More specifically, when the value of raht_inter_node encoded immediately before raht_inter_node to be encoded is 0, that is, when the immediately preceding node is encoded by using intra prediction, the encoding device may select Context 0, and when the value of raht_inter_node encoded immediately before raht_inter_node to be encoded is 1, that is, when the immediately preceding node has been encoded by using inter prediction, the encoding device may select Context 1. Accordingly, in a case where intra prediction or inter prediction consecutively occurs, since the efficiency of arithmetic encoding of raht_inter_coeff is improved, the code amount can be reduced. Note that, in order to suppress the processing amount, the encoding device may encode raht_inter_node with a fixed length.

Note that the encoding device may add, to a bitstream, raht_inter_coeff or raht_inter_node, when the current coeff or the current node is included in the range (depth) for inter prediction or switching prediction. For example, when the depth of the current node to which the current coeff belongs is a depth for inter prediction or switching prediction, raht_inter_coeff or raht_inter_node is added to a bitstream. Accordingly, it is possible to inform the decoding device of whether the current coeff has been encoded by using intra prediction or inter prediction. On the other hand, when the current node to which the current coeff belongs is not included in the range for any one of inter prediction, switching prediction, or inter-prioritized prediction, the encoding device need not add raht_inter_coeff or raht_inter_node to a bitstream. In that case, the decoding device may assume that raht_inter_coeff = 0 or raht_inter_node = 0, and decode the current coeff by intra prediction.

In this manner, when the current node to which the current coeff belongs is included in the range for inter prediction or switching prediction, the encoding device adds raht_inter_coeff or raht_inter_node to a bitstream. Accordingly, since it is possible to perform encoding while switching whether intra prediction or inter prediction is to be used for each current coeff and suppressing the code amount of bitstreams, the coding efficiency can be improved.

attribute_value[i] indicates the value of the i-th coeff (transform coefficient). Note that attribute_value may include a plurality of components. For example, attribute_value may include a sign bit that indicates the positive or negative of a transform coefficient, and the coefficient value that indicates the absolute value of the transform coefficient.

In addition, attribute_value may be subjected to entropy encoding and added to a header. For example, attribute_value may be subjected to binarization and arithmetic encoding. In addition, in order to suppress the processing amount, attribute_value may be encoded with a fixed length.

Note that when each bit after binarization is subjected to arithmetic encoding, the encoding device may switch the coding table (or the context) for each bit. Accordingly, the coding efficiency can be improved. For example, the context for performing arithmetic encoding on attribute_value [i] may be switched according to the value of raht_inter_coeff [i] of the i-th coeff. Specifically, the context for raht_inter_coeff [i] = 0, that is, intra prediction, and the context for raht_inter_coeff [i] = 1, that is, inter prediction, may be respectively prepared, and the context to be used for arithmetic encoding may be switched according to which of intra prediction and inter prediction is to be used for a current node. Accordingly, even when the prediction accuracy differs and the generation tendency of transform coefficients differs between intra prediction and inter prediction, since appropriate contexts can be used for intra prediction and inter prediction, the coding efficiency can be improved.

Note that the method of switching the context for attribute_value is not limited to the above-described system. For example, the context may be switched based on whether or not the depth of a current node to which coeff belongs is included in the range (depth) for inter prediction. For example, when the depth of a current node to which coeff belongs is included in the range for inter prediction, attribute_value is a transform coefficient generated by intra prediction, or a transform coefficient generated by inter prediction. On the other hand, when the depth of the current node to which coeff belongs is not included in the range for inter prediction, attribute_value is a transform coefficient generated by intra prediction. In this manner, since the generation tendency of the value of attribute_value may be different according to whether or not the depth of the current node is included in the range for inter prediction, the coding efficiency can be improved by using a different context for each case.

In addition, the encoding device may switch the context to be used for arithmetic encoding of attribute_value[i], according to the value of raht_inter_node of the node to which the i-th coeff belongs. Accordingly, even when the prediction accuracy differs and the generation tendency of transform coefficients differs between intra prediction and inter prediction, appropriate contexts can be used for intra prediction and inter prediction. Therefore, the coding efficiency can be improved.

Note that, here, although switching of the context in arithmetic encoding by the encoding device has been described, a similar technique can also be applied in switching of the context in arithmetic decoding by a decoding device.

FIG. 22 is a diagram illustrating a syntax example of APS. An APS (Attribute Parameter Set) is control information (also called a parameter set or metadata) included in a bitstream, and is the control information regarding encoding of attribute information. For example, the APS is control information common to a plurality of frames.

As illustrated in FIG. 22, the APS includes inter_raht_prediction_enabled, depth, and raht_inter_priority_enable.

inter_raht_prediction_enabled is a flag that indicates whether or not inter prediction is to be applied to attribute information (a transform coefficient after RAHT). In other words, the flag indicates whether or not the inter prediction scheme is effective. Note that inter_raht_predition_enabled may be stored in the APS when the RAHT system is selected as the encoding system of attribute information, and otherwise need not be stored in the APS. In addition, inter_raht_predition_enabled may be stored in the APS when the RAHT system is selected and prediction coding is selected to be applied in the RAHT system, and otherwise need not be stored in the APS. Accordingly, the code amount of a header can be reduced.

When it is indicated by inter_raht_prediction_enabled that the inter prediction scheme is to be applied, the APS includes depth and raht_inter_priority_enable.

depth is the information indicating the depth (the range for inter prediction) to which inter prediction is to be applied. For example, it may be specified that inter prediction is to be always applied to the top layer, and depth may indicate the depth to which inter prediction is to be applied - 1. For example, inter prediction is applied to layers higher than (or higher than or equal to) the depth (or depth - 1) indicated by depth, and inter prediction is not applied to layers lower than or equal to (or lower than) the depth (or depth - 1) indicated by depth.

raht_inter_priority_enable is the information indicating whether or not priority is given to inter prediction (whether priority is given to inter prediction or priority is given to intra prediction). When the value of raht_inter_priority_enable is 1, priority is given to inter prediction as in the first example, and when the value of raht_inter_priority_enable is 0, priority is given to intra prediction as in the third example. Accordingly, for example, for a scene with fast motion, priority can be given to intra prediction by setting raht_inter_priority_enable to a value 0, and otherwise, priority can be given to inter prediction by setting raht_inter_priority_enable to a value 1. Accordingly, since the encoding device can switch the prediction scheme to be used to the prediction scheme suitable for a scene, the coding efficiency can be improved.

In addition, the encoding device can reduce the amount of bits by adding raht_inter_priority_enable to a bitstream, when inter_raht_prediction_enabled = 1, that is, inter prediction is to be applied.

FIG. 23 is a diagram illustrating another syntax example of APS. Compared to the APS illustrated in FIG. 22, the APS illustrated in FIG. 23 includes depth_u and depth_l instead of depth. Furthermore, compared to the APS illustrated in FIG. 22, in the APS illustrated in FIG. 23, raht_inter_prediction_type is added.

FIG. 24 is a diagram for describing depth_u and depth_l. depth_u is information indicating the depth (range) to which inter-prioritized prediction processing is to be applied in the processing illustrated in FIG. 18 and FIG. 20. For example, as illustrated in FIG. 24, the range over which inter-prioritized prediction processing is to be applied is a range from the topmost layer to the depth (layer) indicated by depth_u. For example, it is stipulated that inter-prioritized prediction processing is definitely applied to the topmost layer, and depth_u may indicate the depth to which inter-prioritized prediction processing is to be applied -1.

depth_I is information indicating the depth (range) to which switching prediction processing is to be applied in the processing illustrated in FIG. 18 and FIG. 20. For example, as illustrated in FIG. 24, the range over which inter-prioritized prediction processing is to be applied is the range between the depth (layer) indicated by depth_u and the depth (layer) indicated by depth_l. depth_l may indicate the depth to which switching prediction processing is to be applied -1. depth_l may be restricted to a layer lower than depth_u. Furthermore, depth_l may indicate the difference value between the depth to which switching prediction processing is to be applied and the depth to which inter-prioritized prediction processing is to be applied that is indicated by depth_u.

Furthermore, depth_u may indicate a depth from a higher layer (the difference between the highest layer and the lowest layer among the layers to which inter-prioritized prediction processing is to be applied), and depth_l may indicate a depth from a lower layer (the difference between the lowest layer and the lowest layer among the layers to which switching prediction processing is to be applied). In this case, the decoding device may determine as a conformance violation a case where actual depth - depth_I < (≤) depth_u.

It should be noted that transmitting, to the decoding device, the information indicating the depth (range) to which switching prediction processing is to be applied is not essential. A depth (range) that is set in advance between the encoding device and the decoding device may be used, without the information being transmitted.

When application of an inter prediction scheme is indicated by inter_raht_prediction_enabled, the APS includes raht_inter_prediction_type. raht_inter_prediction_type is a flag indicating which between first inter prediction and second inter prediction is to be applied. Here, the first inter prediction is, for example, an inter prediction scheme in which motion compensation is not applied, and the second inter prediction is, for example, an inter prediction scheme in which motion compensation is applied.

### [Variations]

In any of the first example to the fifth example described above, the encoding device may always perform determination of the condition for performing intra prediction illustrated in FIG. 4 and FIG. 5, regardless of the depth of a current node, or whether or not inter prediction is to be applied. Alternatively, the encoding device may calculate the number of nearby nodes required for intra prediction, regardless of the prediction mode to be applied. Here, when processing is switched from a layer to which inter prediction is to be applied to a layer to which intra prediction is to be applied, the number of nearby nodes is required for intra prediction processing. For this case, by calculating the number of nearby nodes also when inter prediction is to be applied, since intra prediction processing can be immediately applied when switching to intra prediction, the coding efficiency can be improved.

Furthermore, when the depth of a current node is a depth for inter prediction, or when inter prediction is applied and intra prediction is not performed, the encoding device may initialize control for determining the condition for performing intra prediction. For example, with this initialization, when inter prediction is not subsequently performed, the condition for performing intra prediction can be immediately applied. More specifically, in the determination of the condition for performing intra prediction illustrated in FIG. 5, the encoding device initializes the number of nearby nodes with a value more than or equal to a threshold value. Accordingly, the condition for performing is satisfied when intra prediction is resumed. Therefore, since intra prediction can be immediately applied at the time of switching to intra prediction, the coding efficiency can be improved.

In addition, the encoding device may read the attribute information of a parent node to be used for intra prediction from a reference memory, regardless of the prediction mode to be applied. Accordingly, the processing time in the case where intra prediction is selected can be shortened.

Note that, in intra prediction, the encoding device may calculate the predicted value of the attribute information of a current node by using the attribute information of a nearby node, and calculate a predicted transform coefficient by applying RAHT transform to the predicted value. On the other hand, in the case of inter prediction, the encoding device may store in advance a predicted transform coefficient of a reference frame in a reference buffer, and read its value to use it as the predicted transform coefficient. That is, the calculation method of predicted transform coefficients may be different between intra prediction and inter prediction. Accordingly, when inter prediction is selected, compared with the intra prediction that applies RAHT transform to a predicted value, the encoding device can reduce the processing amount by using the predicted transform coefficient of a reference frame as it is, and the overall processing time can be reduced.

In addition, the information stored in reference buffers may be different between intra prediction and inter prediction. For example, the attribute information of a nearby node may be stored in a reference buffer for intra prediction, and the transform coefficient of the attribute information of a reference frame may be stored in a reference buffer for inter prediction. By increasing the efficiency of processing in each of the prediction methods by switching the information to be stored in the reference buffers according to the prediction method in this manner, the processing amount can be reduced.

For example, in intra prediction, the encoding device calculates a predicted value from the attribute information of a nearby node, calculates a predicted transform coefficient by performing RAHT transform on the predicted value, calculates the difference value (prediction residual) by subtracting the predicted transform coefficient from the transform coefficient of a current node, and performs encoding (for example, entropy encoding) on the difference value. In addition, in inter prediction, the encoding device reads the predicted transform coefficient at the same position from a reference frame, calculates the difference value by subtracting the predicted transform coefficient from the transform coefficient of a current node, and performs encoding (for example, entropy encoding) on the difference value.

The encoding device may perform inter prediction on a transform coefficient when intra prediction cannot be performed, and may conversely perform intra prediction when inter prediction cannot be performed. Accordingly, since the number of nodes to be predicted for a current node is increased, the coding efficiency can be increased.

For example, the following may be used as the condition for performing inter prediction (the selection method of the prediction method). The encoding device may select the prediction method (inter prediction or intra prediction) based on the distance between the position of a current node and the position of a reference node. For example, when the distance is less than a threshold value determined in advance, the encoding device determines that the accuracy of inter prediction is high, and selects inter prediction. When the distance is more than or equal to the threshold value described above, the encoding device may determine that the accuracy of intra prediction is higher than that of inter prediction, and select intra prediction. In this manner, by appropriately switching between inter prediction and intra prediction according to the distance between the current node and the reference node, the encoding device can improve the coding efficiency.

For example, the encoding device may select the prediction method based on match or mismatch in the presence patterns of nearby nodes of a current node and nearby nodes of a reference node, or the like. For example, the more closely the patterns match, it can be expected that the effect of inter prediction is higher in terms of similarity. Therefore, the encoding device selects inter prediction when the patterns match, and otherwise selects intra prediction. Accordingly, the coding efficiency can be improved.

For example, the encoding device may select the prediction method based on match or mismatch in the movement speeds or movement directions of a current node and a reference node, or the like. When the movement speeds or movement directions match, it can be expected that the effect of inter prediction is high. Therefore, the encoding device selects inter prediction when the movement speeds or movement directions match more than or equal to a certain level (when the difference is less than a threshold value), otherwise selects intra prediction. Accordingly, the coding efficiency can be improved.

For example, the encoding device may select the prediction method based on the correlation of attributes between a current node and a reference node. When the correlation of attributes is high, it can be expected that the effect of inter prediction is high. Therefore, the encoding device selects inter prediction when the correlation of attributes of the current node and the reference node is more than or equal to a threshold value determined in advance, and otherwise selects intra prediction. Accordingly, the coding efficiency can be improved.

For example, the encoding device may select the prediction method based on the density of three-dimensional points included in a processing unit (for example, a sequence, a frame, a slice, or the like) to which a current node or a reference node belongs. When the density is high, it can be expected that the distance between neighboring nodes is small, and the effect of intra prediction is high. Therefore, the encoding device may determine that inter prediction is not performed (intra prediction is performed) when the density is high. Note that the density can be determined based on, for example, the number of nodes in a unit space, the distance between a current node and a nearby node, the pattern of nearby nodes, or the like.

Note that the plurality of the conditions described above may be combined. For example, when two or more conditions are all satisfied, a predetermined prediction scheme (inter prediction or intra prediction) may be selected, or when at least one of the two or more conditions is satisfied, a predetermined prediction scheme (inter prediction or intra prediction) may be selected.

In addition, the condition for performing to be used may be selected for each processing unit from the plurality of conditions for performing. Here, the processing unit is, for example, a node, a slice, a frame, or a sequence.

In addition, the mode in which intra prediction is unconditionally performed, or the mode in which intra prediction is not unconditionally performed may be included in the plurality of conditions for performing. In addition, the mode in which inter prediction is unconditionally performed, or the mode in which inter prediction is not unconditionally performed may be included in the plurality of conditions for performing.

In addition, for a third prediction scheme other than the intra prediction scheme and the inter prediction scheme, a condition for performing the third prediction scheme may be similarly provided, and the encoding device may perform, based on the condition for performing one of the three prediction schemes, that prediction scheme, and when that prediction scheme is not performed, the encoding device may perform either of the two remaining prediction schemes. In addition, when neither of the two prediction schemes is performed, the encoding device may perform the remaining prediction scheme.

Note that, here, although the operations by the encoding device have been described as the examples, similar operations may also be performed in a decoding device.

In addition, the encoding device may determine a priority between intra prediction and inter prediction. Accordingly, it can be expected that the encoding device selects an optimal prediction scheme according to a sequence or a situation, and the coding efficiency is increased.

For example, the following conditions can be used as conditions for whether or not to give priority to intra prediction (whether to give priority to intra prediction or give priority to inter prediction). For example, an encoding device may determine the prediction scheme (intra prediction or inter prediction) to which priority is given, based on the layer of RAHT to which a current node belongs. Here, there is a possibility that the efficiency of intra prediction is better in lower layers, since the spatial range is narrower in the lower layers. In addition, there is a possibility that the effect of inter prediction is better in higher layers, since intra prediction is difficult in the higher layers. Therefore, the encoding device may give priority to intra prediction to nodes that belong to lower layers, and may give priority to inter prediction to nodes that belong to higher layers.

For example, the encoding device may determine the prediction scheme to which priority is given, based on the density of three-dimensional points included in a current processing unit or reference processing unit. Here, the processing unit is, for example, a sequence, a frame, or a slice. There is a possibility that the efficiency of intra prediction is good in a processing unit of a dense point cloud, and the efficiency of inter prediction is good in a processing unit of a sparse point cloud. Therefore, the encoding device may give priority to intra prediction when the density of processing units is more than or equal to a threshold value determined in advance, and may give priority to inter prediction when the density of a processing unit is less than the threshold value.

For example, the encoding device may determine the prediction scheme to which priority is given, based on the motion, the difference in movement speed, or the difference in movement direction between a current processing unit and a reference process unit. For example, there is a high possibility that the effect of inter prediction is good when the motion between both is small, and the efficiency of intra prediction is good when the motion is large. In addition, this tendency also applies to movement speed and movement direction. Therefore, the encoding device may give priority to inter prediction when the motion, the difference in movement speed, or the difference in movement direction is less than a threshold value determined in advance, and may give priority to intra prediction when the motion, the difference in movement speed, or the difference in movement direction is more than or equal to the threshold value.

For example, the encoding device may determine the prediction scheme to which priority is given, based on the correlation of attributes of a current processing unit and a reference process unit. There is a high possibility that the efficiency of inter prediction is good when the absolute amount of correlation is large, and the efficiency of intra prediction is good when the absolute amount of correlation is small. Therefore, the encoding device may give priority to inter prediction when the absolute amount of correlation is more than or equal to a threshold value determined in advance, and may give priority to intra prediction when the absolute amount of correlation is less than the threshold value.

For example, the encoding device may determine the prediction scheme to which priority is given, based on a setting value stored in control information such as an SPS included in a bitstream. Accordingly, the encoding device can select the prediction scheme suitable for a sequence. The SPS (Sequence Parameter Set) is control information (a parameter set) common to a plurality of frames.

In addition, a decoding device may determine the prediction scheme to which priority is given, according to the information such as a flag included in a bitstream. Accordingly, the prediction scheme suitable for a sequence or a situation can be selected. In addition, the information may be stored for each node, slice, frame, or sequence.

Note that the plurality of conditions described above may be combined. For example, when two or more conditions are all satisfied, a priority may be given to a predetermined prediction scheme (inter prediction or intra prediction), or when at least one of the two or more conditions is satisfied, a priority may be given to a predetermined prediction scheme (inter prediction or intra prediction).

In addition, the condition to be used may be selected for each processing unit from the plurality of conditions. Here, the processing unit is, for example, a node, a slice, a frame, or a sequence.

In addition, the mode that unconditionally gives priority to intra prediction, or the mode that does not unconditionally give priority to intra prediction may be included in the plurality of conditions. In addition, the mode that unconditionally gives priority to inter prediction, or the mode that does not unconditionally give priority to inter prediction may be included in the plurality of conditions.

In addition, for the priority of the third prediction scheme other than the priority of intra prediction and the priority of inter prediction, a condition for the priority of the third prediction scheme may be similarly provided, and the encoding device may select the prediction scheme to which priority is given, based on the condition of the priority of one of the three prediction schemes, and when priority is not given to that prediction scheme, the encoding device may give priority to either of the two remaining prediction schemes. In addition, when priority is given to neither of the two prediction schemes, the encoding device may give priority to the remaining prediction scheme.

The third prediction scheme may be a system in which prediction is not performed. Specifically, the third prediction scheme may be a system in which neither inter prediction nor intra prediction is applied. Furthermore, the third prediction method may be applied as an additional system to any of the systems of the first example to the fifth example described above.

When the third prediction scheme is to be used, raht_inter_node may take any of three values, 0 or 1 or 2. Furthermore, raht_inter_node may include two flags, raht_inter_node_1 and raht_inter_node_2. Each of raht_inter_node_1 and raht_inter_node_2 is, for example, a single flag that takes two values, 0 or 1.

For example, raht_inter_node_1 = 0 indicates intra prediction or no prediction (i.e., neither intra prediction nor inter prediction are to be applied), raht_inter_node_1 = 1 indicates inter prediction, raht_inter_node_2 = 0 indicates no prediction, and raht_inter_node_2 = 1 indicates intra prediction. Furthermore, the syntax illustrated in FIG. 25 may be used. For example, the syntax illustrated in FIG. 25 may be included in syntax of attribute data (attribute_data).

As illustrated in FIG 25, raht_inter_node_2 is included in the bitstream when raht_inter_node_1 = 0, and raht_inter_node_2 is not included in the bitstream when raht_inter_node_1 = 1. In other words, when inter prediction is to be applied, only raht_inter_node_1 = 1 is included in the bitstream, and raht_inter_node_2 is not stored in the bitstream. When intra prediction is to be applied, raht_inter_node_1 = 0 and raht_inter_node_2 = 1 are stored in the bitstream. When no prediction is to be applied, raht_inter_node_1 = 0 and raht_inter_node_2 = 0 are stored in the bitstream.

In this manner, according to the logic of either one flag of the two flags, the other flag may be stored in the bitstream.

It should be noted that the above-described correspondence relationship between the respective values of raht_inter_node_1 and raht_inter_node_2 is one example, and may be other than that described above. Furthermore, the condition for the existence of the other flag may be other than that described above.

Furthermore, a system that uses only the first prediction scheme and the second prediction scheme, without using the third prediction scheme, and a system that uses all of the first to third prediction schemes may be switched. In this case, a signal for performing such switch may be stored in an SPS, an APS, an ADUH (Attribute Data Unit Header), or the like. The ADUH is the header (control information) of an ADU (Attribute Data Unit). The ADU is a data unit of encoded data of attribute information.

Note that, here, although the operations by the encoding device have been described as the examples, similar operations may also be performed in a decoding device.

In addition, in the above description, although the example has been described in which prediction is performed on the transform coefficient generated by RAHT, a similar technique may be applied to coefficients generated by a transform system other than RAHT. When coefficients generated by the transform system other than RAHT are correlated, there is a possibility that the coding efficiency is improved. The transform system other than RAHT may be, for example, hierarchical transform using a Dyadic tree as in RAHT. In addition, the transform system other than RAHT is not limited to hierarchical transform, and may be a transform system that derives the value for each component of attribute information. For example, the transform system other than RAHT may be principal component analysis.

### [Conclusion]

A decoding device (three-dimensional data decoding device) according to the embodiment performs the process illustrated in FIG. 26. The decoding device: in a first prediction process performed when a depth of a current node that stores a three-dimensional point is less than a first threshold value, prioritizes inter prediction over intra prediction (S501); in a second prediction process performed when the depth is less than a second threshold value and less than or equal to the first threshold value, uses a prediction scheme indicated in control information included in a bitstream, the second threshold value being greater than the first threshold value (S502); and in a third prediction processing performed when the depth is less than or equal to the second threshold value, uses the intra prediction (S503).

Accordingly, in the encoding device, by using a prediction scheme that is suited to the depth of each node, a bitstream having improved encoding efficiency is generated. Furthermore, the decoding device can appropriately decode the bitstream.

For example, in at least one of the first prediction process, the second prediction process, or the third prediction process, both the intra prediction and the inter prediction are not to be used under a predetermined condition. Accordingly, in the encoding device, according to a predetermined condition, some nodes can be encoded without using a prediction process, and thus a bitstream for which coding efficiency has been improved can be generated.

For example, the decoding device further: determines a prediction process to be used for the current node, by using first information (for example, depth_u and depth_I) that is included in the bitstream and indicates the first threshold value and the second threshold value. Accordingly, the decoding device can determine the prediction process to be used for the current node, using the first information.

For example, the first information includes: second information (for example, depth_u) indicating an ordinal level of depth of the first threshold value relative to a shallowest depth, and third information (for example, depth_I) indicating an ordinal level of depth of the second threshold value relative to a deepest depth. Accordingly, the data amount of the first information can be reduced.

For example, the control information includes a first flag (for example, raht_inter_node_1) for the current node for which the second prediction process is to be used. When the first flag indicates a first value (for example, 0): the control information further includes a second flag (for example, raht_inter_node_2) for the current node. When the second flag indicates a third value (for example, 1), the intra prediction is to be used in the prediction process for the current node; and when the second flag indicates a fourth value (for example, 0), both the inter prediction and the intra prediction are not to be used in the prediction process for the current node. When the first flag indicates a second value (for example, 1): the second flag is not included in the bitstream; and the inter prediction is to be used in the prediction process for the current node. Accordingly, when the frequency at which inter prediction is to be used is high, the data amount of the control information can be reduced and the processing amount in the decoding device can be reduced.

FIG. 27 is a block diagram of decoding device 10. For example, decoding device 10 includes processor 11 and memory 12, and processor 11 performs the above processing using memory 12.

Furthermore, an encoding device (three-dimensional data encoding device) according to the embodiment performs the process illustrated in FIG. 28. The encoding device: in a first prediction process performed when a depth of a current node that stores a three-dimensional point is less than a first threshold value, prioritizes inter prediction over intra prediction (S511); in a second prediction process performed when the depth is less than a second threshold value and less than or equal to the first threshold value, stores, in a bitstream, control information indicating a prediction scheme used, the second threshold value being greater than the first threshold value (S512); and in a third prediction process performed when the depth is less than or equal to the second threshold value, uses the intra prediction (S513).

Accordingly, the encoding device can generate a bitstream for which coding efficiency has been improved, by using a prediction scheme that suits the depth of each node.

In addition, the encoding device may perform processing similar to that of the decoding device. For example, the encoding device may perform processing in which decoding in the above-described decoding device is replaced with encoding.

FIG. 29 is a block diagram of encoding device 20. For example, encoding device 20 includes processor 21 and memory 22, and processor 21 performs the above processing using memory 22.

An encoding device (three-dimensional data encoding device), a decoding device (three-dimensional data decoding device), and the like, according to embodiments of the present disclosure and variations thereof have been described above, but the present disclosure is not limited to these embodiments, etc.

For example, although the target of the application of the prediction processes that are switched is a node in the above-described embodiments and variants, the target of the application of the prediction processes that are switched may be another data unit that stores three-dimensional data. Furthermore, although the criterion for switching the prediction process is depth in the above-described embodiments and variants, the criterion for switching the prediction process may be anything as long as it is related to the position of data units. For example, in place of depth, the branching level of a tree structure or the level of detail of data.

Note that each of the processing units included in the encoding device, the decoding device, and the like, according to the above embodiments is typically implemented as a large-scale integrated (LSI) circuit, which is an integrated circuit (IC). These may take the form of individual chips, or may be partially or entirely packaged into a single chip.

Such IC is not limited to an LSI, and thus may be implemented as a dedicated circuit or a general-purpose processor. Alternatively, a field programmable gate array (FPGA) that allows for programming after the manufacture of an LSI, or a reconfigurable processor that allows for reconfiguration of the connection and the setting of circuit cells inside an LSI may be employed.

Moreover, in the above embodiments, the constituent elements may be implemented as dedicated hardware or may be realized by executing a software program suited to such constituent elements. Alternatively, the constituent elements may be implemented by a program executor such as a CPU or a processor reading out and executing the software program recorded in a recording medium such as a hard disk or a semiconductor memory.

The present disclosure may also be implemented as an encoding method (three-dimensional data encoding method), a decoding method (three-dimensional data decoding method), or the like executed by the encoding device (three-dimensional data encoding device), the decoding device (three-dimensional data decoding device), and the like.

Furthermore, the present disclosure may be implemented as a program for causing a computer, a processor, or a device to execute the above-described encoding method or decoding method. Furthermore, the present disclosure may be implemented as a bitstream generated by the above-described encoding method. Furthermore, the present disclosure may be implemented as a recording medium on which the program or the bitstream is recorded. For example, the present disclosure may be implemented as a non-transitory computer-readable recording medium on which the program or the bitstream is recorded.

Also, the divisions of the functional blocks shown in the block diagrams are mere examples, and thus a plurality of functional blocks may be implemented as a single functional block, or a single functional block may be divided into a plurality of functional blocks, or one or more functions may be moved to another functional block. Also, the functions of a plurality of functional blocks having similar functions may be processed by single hardware or software in a parallelized or time-divided manner.

Also, the processing order of executing the steps shown in the flowcharts is a mere illustration for specifically describing the present disclosure, and thus may be an order other than the shown order. Also, one or more of the steps may be executed simultaneously (in parallel) with another step.

An encoding device, a decoding device, and the like, according to one or more aspects have been described above based on the embodiments, but the present disclosure is not limited to these embodiments. The one or more aspects may thus include forms achieved by making various modifications to the above embodiments that can be conceived by those skilled in the art, as well forms achieved by combining constituent elements in different embodiments, without materially departing from the spirit of the present disclosure.

### [Industrial Applicability]

The present disclosure is applicable to an encoding device and a decoding device.

### [Reference Signs List]

- 10: decoding device
- 11, 21: processor
- 12, 22: memory
- 20: encoding device

## Claims

1. A decoding method comprising:
in a first prediction process performed when a depth of a current node that stores a three-dimensional point is less than a first threshold value, prioritizing inter prediction over intra prediction;
in a second prediction process performed when the depth is less than a second threshold value and less than or equal to the first threshold value, using a prediction scheme indicated in control information included in a bitstream, the second threshold value being greater than the first threshold value; and
in a third prediction process performed when the depth is less than or equal to the second threshold value, using the intra prediction.

2. The decoding method according to claim 1, wherein
in at least one of the first prediction process, the second prediction process, or the third prediction process, both the intra prediction and the inter prediction are not to be used under a predetermined condition.

3. The decoding method according to claim 1, further comprising:
determining a prediction process to be used for the current node, by using first information that is included in the bitstream and indicates the first threshold value and the second threshold value.

4. The decoding method according to claim 3, wherein
the first information includes:
second information indicating an ordinal level of the first threshold value from a shallowest depth, and
third information indicating an ordinal level of the second threshold value from a deepest depth.

5. The decoding method according to claim 1, wherein
the control information includes a first flag for the current node for which the second prediction process is to be used,
when the first flag indicates a first value:
the control information further includes a second flag for the current node;
when the second flag indicates a third value, the intra prediction is to be used in a prediction process for the current node; and
when the second flag indicates a fourth value, both the inter prediction and the intra prediction are not to be used in the prediction process for the current node, and
when the first flag indicates a second value:
the second flag is not included in the bitstream; and
the inter prediction is to be used in the prediction process for the current node.

6. A decoding device comprising:
a processor; and
memory, wherein
using the memory, the processor:
in a first prediction process performed when a depth of a current node that stores a three-dimensional point is less than a first threshold value, prioritizes inter prediction over intra prediction;
in a second prediction process performed when the depth is less than a second threshold value and less than or equal to the first threshold value, uses a prediction scheme indicated in control information included in a bitstream, the second threshold value being greater than the first threshold value; and
in a third prediction process performed when the depth is less than or equal to the second threshold value, uses the intra prediction.

7. An encoding device comprising:
a processor; and
memory, wherein
using the memory, the processor:
in a first prediction process performed when a depth of a current node that stores a three-dimensional point is less than a first threshold value, prioritizes inter prediction over intra prediction;
in a second prediction process performed when the depth is less than a second threshold value and less than or equal to the first threshold value, stores, in a bitstream, control information indicating a prediction scheme used, the second threshold value being greater than the first threshold value; and
in a third prediction process performed when the depth is less than or equal to the second threshold value, uses the intra prediction.
